# EUROPEAN PATENT SPECIFICATION

(11) **EP 2 338 101 B1**
(45) Date of publication and mention of the grant of the patent: **04.12.2019**
(21) Application number: 09820726.9
(22) Date of filing: 12.10.2009
(51) Int. Cl.: G06F 3/0488, G06F 3/0482, G06F 9/451

(54) **OBJECT MANAGEMENT METHOD AND APPARATUS USING TOUCHSCREEN**
OBJEKTVERWALTUNGSVERFAHREN UND -VORRICHTUNG MIT TOUCHSCREEN
PROCEDE ET APPAREIL DE GESTION D'OBJETS METTANT EN OEUVRE UN ECRAN TACTILE

(30) Priority: 13.10.2008 KR 20080100119
(43) Date of publication of application: 29.06.2011
(73) Proprietor: Samsung Electronics Co., Ltd., Suwon-si, Gyeonggi-do, 443-742 (KR)
(72) Inventor: CHOI, Hyong Uk, Seoul 157-019 (KR); YANG, Sun Ok, Gunpo-si Gyeonggi-do 435-060 (KR)
(74) Representative: HGF Limited
(86) International application number: PCT/KR2009/005835
(87) International publication number: WO 2010/044576

(56) References cited:
- WO-A1-2007/037806
- WO-A1-2008/085737
- JP-A- H06 282 375
- US-A- 5 675 358
- US-A1- 2006 001 656
- US-A1- 2008 036 743
- US-A1- 2008 165 140
- US-B1- 7 030 861
- REKIMOTO J ED - TERVEEN L ET AL: "SMARTSKIN: AN INFRASTRUCTURE FOR FREEHAND MANIPULATION ON INTERACTIVE SURFACES", CHI 2002 CONFERENCE PROCEEDINGS. CONFERENCE ON HUMAN FACTORS IN COMPUTING SYSTEMS. MINNEAPOLIS, MN, APRIL 20 - 25, 2002; [CHI CONFERENCE PROCEEDINGS. HUMAN FACTORS IN COMPUTING SYSTEMS], NEW YORK, NY : ACM, US, 20 April 2002 (2002-04-20), pages 113-120, XP001099406, DOI: 10.1145/503376.503397 ISBN: 978-1-58113-453-7
- JUN REKIMOTO ET AL.: 'SmartSkin: An Infrastructure for Freehand Manipulation on Interactive Surfaces' CHI 2002 20 April 2002, XP001099406
- 'Proc. of ACM Symposium on Virtual Reality Software and Technology, Hong-Kong, July 1996', article RONAN BOULIC ET AL.: 'Multi-Finger Manipulation of Virtual Objects', XP008136507
- STONE D: "The Office Clipboard", PC MAGAZINE (GB EDITION), ZIFF-DAVIS, LONDON, GB, 1 December 2001 (2001-12-01), pages 1-2, XP002461637, ISSN: 0888-8507
- Mary Millhollon ET AL: "Putting Text Tools to Work - Exploring the Improved Clipboard" In: "Microsoft Office Word 2003 Inside Out", 12 October 2003 (2003-10-12), Microsoft Press, XP055440720, ISBN: 0-7356-1515-2 page i, ii, x, 218-220,

## Description

### Technical Field

The present invention relates to virtually any electronic device having a touchscreen display, including but in no way limited to portable terminals. More particularly, the present invention relates to an object management method and apparatus for a device having a touchscreen that is capable of handling a plurality of objects displayed on the screen.

### Background Art

Touchscreen is becoming widely used and extremely popular with portable devices such as mobile phones and laptop computers. With the prospect of adoption of the touchscreen in various fields, the touchscreen market appears to grow significantly in the future. As an example, electric appliances equipped with touchscreen panels are emerging in the market and thus the production of touchscreen panels is accelerating.

In the meantime, much research has been conducted in the area of user intention and behavior recognition that is based on visual information, so as to provide for more natural interaction between a human and a touchscreen. Among them, the finger/pen gesture input recognition technology has been implemented in the form of the touchscreen to provide a user-friendly input/output interface. Recently, the touchscreen technologies have been developed such that the touchscreen panel recognizes simultaneously occurring multiple touch points as well as single touch point.

Typically, a conventional touchscreen includes a display panel for displaying visual data and a touch panel typically positioned in front of the display screen such that the touch sensitive surface covers the viewable area of the display screen. The touchscreen detects touches as well as the positions of the touches on the touch sensitive surface and the touchscreen-equipped device analyzes the touches to recognize the user's intention (the function the user seeks to activate) and performs an action based on analysis result. Particularly, the use of a multi-touch-enabled touchscreen has expanded to various application fields requiring interactive and cooperative operations with the advances of the hardware, software, and sensing technologies. Using the multiple touch-points recognizable touchscreen, the user can more input commands to the device with more diverse touch events.

As aforementioned, the touchscreen is a device designed to detect and analyzes touch gestures formed by a hand or a touch pen (such as a stylus), which has a shape of a ball point pen, on the touchscreen such that the device interprets the touch gesture to perform an operation corresponding to the touch gesture.

There are several types of touchscreen technologies in use today including a resistive technology which detects a contact between two conductive layers, a capacitive technology which detects a small electric charge drawn to the contact point, infrared technology which detects blocking of infrared ray, etc.

In the touchscreen-enabled devices, the touch gestures formed on the touchscreen replace keys of the conventional keypad to give advantages from the viewpoint of interfacial convenience, reduce size and weight of the device, etc. However, most of current touchscreen-enabled devices lack the intuitive control mechanisms that would permit advanced multi-touch functionality. Thus, there is a long-felt need in the art to develop a more convenient and intuitive touch user interfacing method for touchscreen-enabled devices.

Rekimoto, J., "SmartSkin: An Infrastructure for Freehand Manipulation on Interactive Surfaces", CHI 2002 Conference Proceedings, Conference on Human Factors in Computing Systems, pages 113-120 describes a sensor architecture for making interactive surfaces that are sensitive to human hand and finger gestures. WO 2007/037806 A1 describes a technique that acquires raw track pad sensor data and transmits this data to a host computer where it is analysed by an application executing on one or more host computer central processing units. US 7030861 B1 describes a multi-touch system that compares finger arrangements at the beginning of multi-touch gestures and discriminates between neutral and spread-hand performances. US 5675358 A describes a technique for digital image capture control. JP H06282375 A describes a technique for transferring data between devices. Other techniques are described in US 2008/165140 A1, WO 2008/085737 A1 and US 2006/001656 A1.

### Disclosure of Invention

### Technical Problem

The present invention provides an object management method and apparatus for a device equipped with a touchscreen that senses multi-touch input and output an action intuitively.

Also, the present invention provides an object management method and apparatus for a device equipped with a touchscreen that handles objects displayed on the screen intuitively with a multi-touch input.

Also, the present invention provides an object management method and apparatus for a device equipped with a touchscreen that picks up and releases an object display on the screen with a multi-touch input.

Also, the present invention provides an object management method and apparatus for a device equipped with a touchscreen that improves utilization of the touchscreen and user convenience by handling objects displayed on the screen with diversified touch gestures.

### Solution to Problem

In accordance with an aspect of the present invention, there is provided an object management method for a touchscreen-enabled device, comprising: receiving a first multi-touch input to select one or more objects displayed on a touchscreen; storing the selected one or more objects and removing a display of the selected one or more objects; receiving a second multi-touch input to release the selected one or more objects on the touchscreen; and displaying the selected one or more objects at a position where the second multi-touch input is received on the touchscreen.

In accordance with another aspect of the present invention, there is provided a device having a touchscreen, comprising: a touchscreen configured to display one or more objects and sense a first multi-touch input to select one or more objects and a second multi-touch input to release the selected one or more objects; a storage unit configured to store settings related to the first multi-touch input and the second multi-touch input and store one or more objects selected by the first multi-touch input; and a control unit configured to detect the first multi-touch input to select one or more objects displayed on the touchscreen, to store the selected one or more objects and remove a display of the selected one or more objects, to detect the second multi-touch input on the touchscreen, and to display the selected one or more objects at a position where the second multi-touch input is detected on the touchscreen.

### Advantageous Effects of Invention

As described above, the object management method and apparatus of the present invention allows the user to handle the objects efficiently and intuitively by forming diverse touch gestures on a touch screen.

Also, the object management method and apparatus of the present invention allows the user to pick up and release objects displayed on the screen with intuitive multi-touch gesture formed with fingers as if handling physical objects, thereby improving user convenience and utilization ability of a touchscreen-enabled device with excitement.

Also, the object management method and apparatus of the present invention allows the user to input diverse user commands with intuitive touch gestures in the innovative input/out environment, thereby reinforcing the competitiveness of information processing devices such as interactive television, mobile devices, personal computers, audio devices, and other white appliances.

### Brief Description of Drawings

The above and other exemplary objects, features and advantages of the present invention will become more apparent to the person of ordinary skill in the art from the following detailed description in conjunction with the accompanying drawings, in which:
FIG. 1 is a flowchart illustrating exemplary operation of an object management method for a device having a touchscreen according to an exemplary embodiment of the present invention;
FIGs. 2 to 5 are diagrams illustrating exemplary screen images for explaining steps of an object pickup procedure of an object management method according to an exemplary embodiment of the present invention;
FIG. 6 is a diagram illustrating a step of storing the objects picked up through the object pickup procedure of FIGs. 2 to 5;
FIGs. 7 to 9 are diagrams illustrating exemplary screen images having supplementary function items related to an object management method according to an exemplary embodiment of the present invention;
FIGs. 10 to 12 are diagrams illustrating exemplary screen images for explaining steps of an object release procedure of an object management method according to an exemplary embodiment of the present invention;
FIGs. 13 to 16 are diagrams illustrating exemplary screen images for explaining steps of an object release procedure of an object management method according to another exemplar embodiment of the present invention;
FIGs. 17 to 21 are diagrams illustrating exemplary screen images for explaining steps of a listed object pickup procedure of an object management method according to an exemplary embodiment of the present invention;
FIGs. 22 to 25 are diagrams illustrating exemplary screen images for explaining steps of a listed object release procedure of an object management method according to an exemplary embodiment of the present invention;
FIG. 26 to 34 are diagrams illustrating exemplary screen images for explaining steps of a multiple objects pickup procedure of an object management method according to an exemplary embodiment of the present invention;
FIGs. 35 to 41 are diagrams illustrating exemplary screen images for explaining steps of a multiple object release procedure of an object management method according to an exemplary embodiment of the present invention;
FIGs. 42 to 45 are diagrams illustrating exemplary screen images for explaining steps of an image edit procedure of an object management method according to an exemplary embodiment of the present invention;
FIGs. 46 and 47 are a flowchart illustrating an object handling method according to an exemplary embodiment of the present invention;
FIG. 48 is a flowchart illustrating a touch gesture interpretation procedure of the object handling method according to an exemplary embodiment of the present invention;
FIGs. 49 and 50 are conceptual diagrams illustrating how to interpret a touch gesture into a pickup command in the object handling method according to an exemplary embodiment of the present invention;
FIGs. 51 and 52 are conceptual diagrams illustrating how to form the pickup and release gestures for generating the first and second type multi-touch input in an object handling method according to an exemplary embodiment of the present invention;
FIGs. 53 and 54 are conceptual diagrams illustrating an exemplary object selection operation using a pickup gesture introduced for the object handling method according to an exemplary embodiment of the present invention;
FIGs. 55 to 57 are conceptual diagrams illustrating another exemplary object selection operation using a pickup gesture introduced for the object handling method according to an exemplary embodiment of the present invention;
FIGs. 58 to 60 are conceptual diagrams illustrating how to determine an object as the target of a first type multi-touch input according to an exemplary embodiment of the present invention;
FIGs. 61 and 62 are conceptual diagrams illustrating operations for canceling the pickup command after an object is select by the pickup gesture in the object handling method according to an exemplary embodiment of the present invention;
FIGs. 63 to 65 are diagrams illustrating exemplary screen images for explaining how the first multi-touch input is applied to a game application according to an exemplary embodiment of the present invention;
FIG. 66 is a sequence diagram illustrating operations of first and second devices in an object handling method according to an exemplary embodiment of the present invention;
FIGs. 67 to 71 are diagrams illustrating screen images for explaining the operations of FIG. 66; and
FIG. 72 is a block diagram illustrating a configuration of a device according to an exemplar embodiment of the present invention.

### Mode for the Invention

Exemplary embodiments of the present invention are described with reference to the accompanying drawings in detail. The same reference numbers are used throughout the drawings to refer to the same or similar parts. Detailed descriptions of well-known functions and structures incorporated herein may be omitted to avoid obscuring appreciation of the subject matter of the present invention by a person of ordinary skill in the art.

The present invention provides a device having a touchscreen that provides detection and recognition of touch gestures formed on the screen, and interpreting the touch event into a command such that that the user can move, delete, copy, and modify the objects displayed on the screen by means of the touchscreen. Accordingly, the user can operate the objects stored in the device intuitively and conveniently with diverse touch gestures.

In an exemplary embodiment of the present invention, the touch gestures include multi-touch gestures formed with multiple touch points. The touchscreen-enabled device recognizes pickup and release gestures formed with multiple fingers and executes distinct application algorithms according to the gestures. In an exemplary embodiment of the present invention, the pickup gesture (a first type of multi-touch input) is interpreted as a pickup command for picking up an object displayed on the screen and the release gesture (a second type of multi-touch input) is interpreted as a release command to release the object picked up by the pickup command. Also, the pickup command and the release command can be executed with corresponding visual effects.

In another exemplary embodiment of the present invention, the touchscreen-enabled device recognizes the pickup gesture (the first type of multi-touch input) and performs the pickup operation with a virtual pickup behavior of the object, and thereafter recognizes the release gesture (the second type of multi-touch input) and performs the release operation with a virtual release behavior of the object. By forming the pickup and release gestures in series, the user can move, delete, copy, and modify the objects stored in the device intuitively and conveniently.

In an exemplary embodiment of the present invention, the touch gestures include single-touch gestures formed with a single touch point.

In the following exemplary descriptions, multi-touch means a touch gesture formed with at least two touch points, and single-touch means a touch gesture formed with a single touch point detected on the touchscreen. The multi-touch gesture can be formed with multiple touch points detected simultaneously or in series during a predetermined time period.

In another exemplary embodiment of the present invention, the first type of multi-touch input for picking up an object is followed by the second type of multi-touch input that determines a target operation for the object picked up. The target operation can be a movement, deletion, copy, modification, etc.

The multi-touch input and multi-touch input-based object management method according to some exemplary embodiments of the present invention are described hereinafter with reference to drawings.

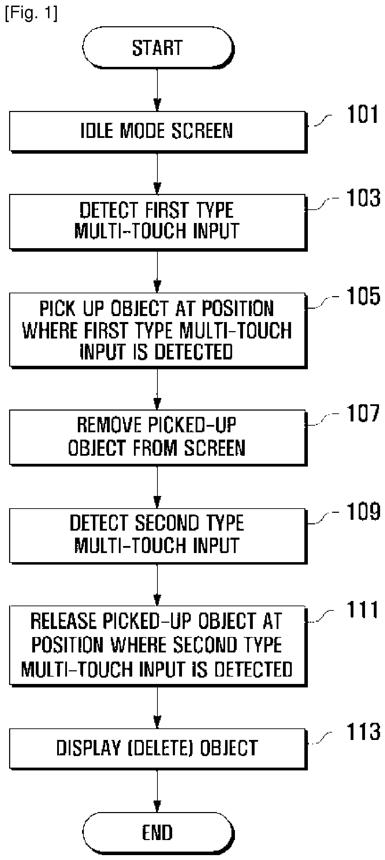

FIG. 1 is a flowchart illustrating exemplary operational overview of an object management method for a device having a touchscreen according to an exemplary embodiment of the present invention.

Referring now to FIG. 1, the device enters an idle mode at power-on (101). While operating in idle mode, the device detects a first type multi-touch input (103) and picks up an object placed at the position on which the first type multi-touch input is detected (105). The idle mode is characterized with an idle mode screen composed of a background image on which objects are distributed or not. The objects can be graphical user interface elements including application icon, menu list, menu item constituting the menu list, picture, text, background image, and the like that can be presented on the touchscreen.

In an exemplary embodiment of the present invention, the first type multi-touch input may include a touch event predefined by multiple touch points and designated for the pickup action. The first type multi-touch input and actions to be taken by the first type multi-touch input are described hereinafter.

When the first type multi-touch input is detected on an object displayed in the idle mode screen, the device selects the object with a pickup action. In case that no object is displayed in the idle mode screen, the device can select the background image with the pickup action. This means that the background image may include an object to be picked up with the pickup gesture. The background pickup operation is described hereinafter.

After picking up the object at step 105, the device controls the object to "disappear" from the idle mode screen (107) being viewed. Although removed from the idle mode screen, the object (or macro information to call the object) is stored in a specific region of a storage.

The object can be stored in the form of a call stack until a call event occurs. In an exemplary embodiment of the present invention, the call event may comprise the second multi-touch event or a predetermined touch event designated for canceling the pickup operation.

Next, the device detects a second type multi-touch input on the idle mode screen in which the object has been removed (109). Here, the second type multi-touch input is a multi-touch gesture formed with multiple touch points on the touchscreen and designated for releasing the object picked up by the first type multi-touch input. The call event occurred by the second type multi-touch input can be configured to call the most recently picked-up object or all the objects picked up prior to the call event. The second type multi-touch input and actions to be taken by the second type multi-touch input are described hereinafter.

Once the second type multi-touch input is detected, the device releases the object picked up by the first type multi-touch input at the position where the second type multi-touch input is detected (111). As a consequence, the released object appears at the release position on the idle mode screen (113). In case that the second-touch input is detected on an icon representing a recycle bin function, the object can be deleted from the device. The object deletion operation is described in detail hereinafter.

As described above, the object management method according to an exemplary embodiment enables manipulates objects with the pickup and release gestures formed on the touchscreen. The object pickup and release operations are described hereinafter in more detail with exemplary embodiments.

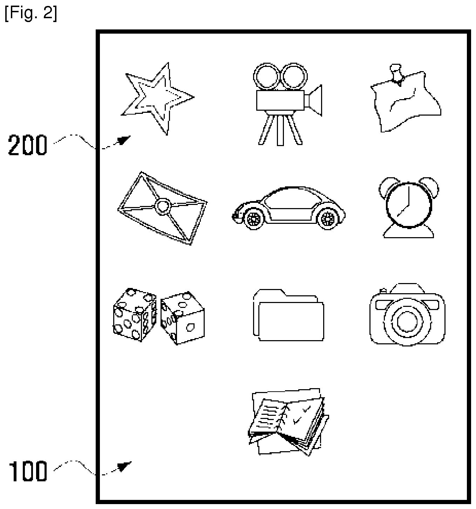

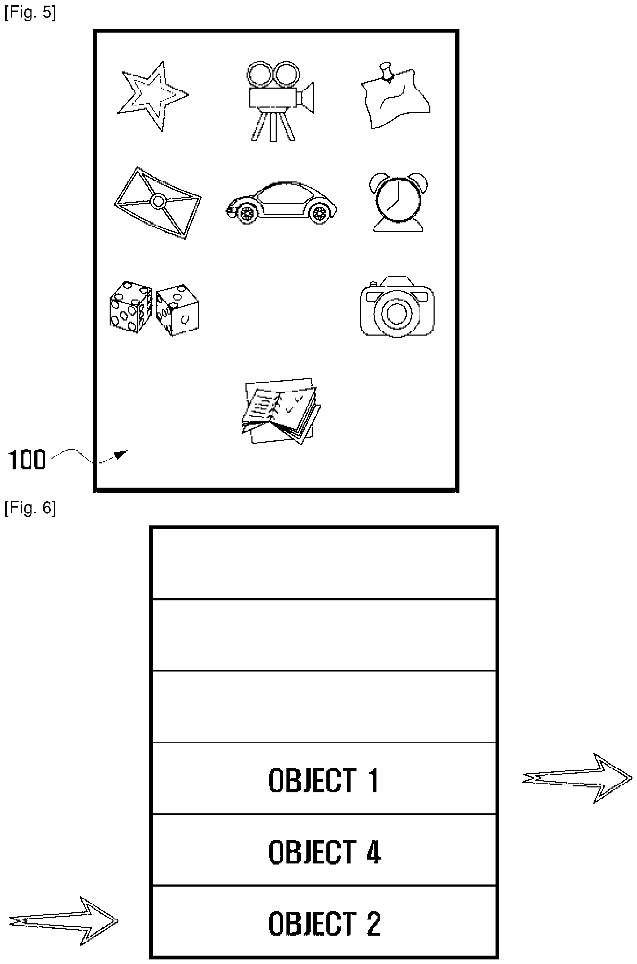

FIGs. 2 to 5 are diagrams illustrating exemplary screen images for explaining steps of an object pickup procedure of an object management method according to an exemplary embodiment of the present invention, and FIG. 6 is a diagram illustrating a step of storing the objects picked up through the object pickup procedure of FIGs. 2 to 5.

Referring now to FIGs. 2 to 5, the device displays the idle mode screen 100 in response to the user request as shown in FIG. 2. The idle mode screen has a plurality of objects 200 distributed thereon. The objects include function execution icons, gadgets such as widgets and widget icons, pictures, thumbnail images of the pictures, and the like.

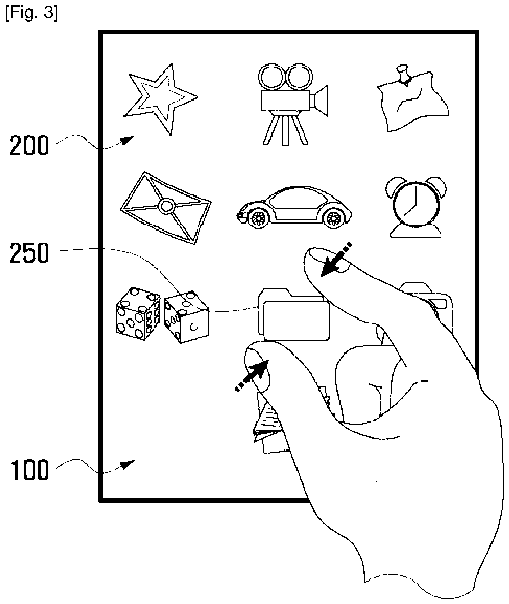

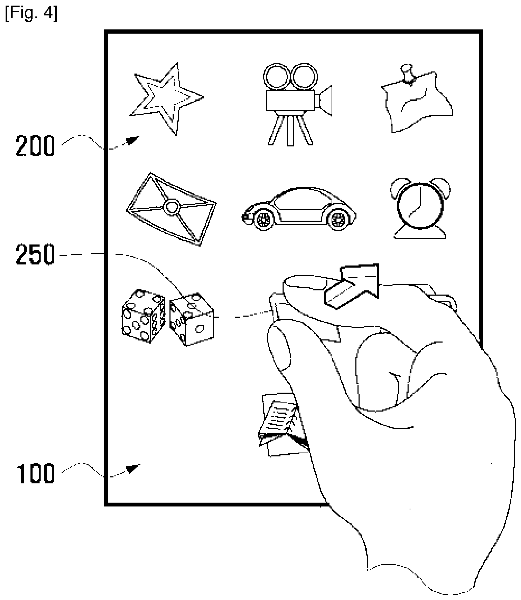

The device detects a multi-touch input for picking up one 250 of the objects displayed on the idle mode screen 100 with the pickup gesture as shown in FIGs. 3 and 4. In this particular example, the item being picked up is an icon that looks like a manila file folder. As discussed above, the pickup gesture is the first type multi-touch input formed with two touch points and designated for picking up an object. That is, if the user makes a pickup gesture on the target object 250 among the plural objects displayed in the idle mode screen, the device registers the pickup gesture as the first type multi-touch input and thus performs a pickup effect (action) designated for the pickup gesture.

Here, the pickup effect is a visual effect showing an action as if the object 250 is physically held between fingers and drawn up above the idle mode screen as shown in FIG. 4. At this time, the object 250 can be configured to disappear with a fade-down effect in which the object 250 disappears gradually.

In more detail, if the first type multi-touch input is detected on the touchscreen, the device interprets the multi-touch input into a function execution signal. Next, the device tracks the movement of the touch points and, if the touch points are dragged to approach each other, recognizes that a pickup gesture is formed on the touchscreen. Accordingly, the device performs the pickup action designated for the pickup gesture. At this time, the device registers the object picked up by the pickup gesture in "pick state".

The pickup gesture for selecting an object can be made by touching two points with a distance greater than a predetermined threshold value on the touchscreen and drags the two touch points to approach each other. If the pickup gesture is recognized, the device interprets the pickup gesture to perform the pickup action. When an object is selected by the pickup gesture, the device can indicate the selection of the object with a special effect. For instance, the selected object can be displayed with a highlight effect or other effect obtaining user attention.

If the contacts at the two touch points are released after the object 250 is picked up, i.e. if the two fingers are lifted up off the idle mode screen as shown in FIG. 4, the device registers the object in "up state". That is, the lift-up gesture is interpreted to perform an action to show as if the picked-up object is lifted up off the idle mode screen 100.

Accordingly, the device interprets the lift-up gesture to perform the action to show the object 250 with the corresponding visual effect. For instance, the object can be presented as if it is suspended from the lifted fingers. At this time, the object can be shown to gradually disappear from the idle mode screen.

As described above, the first type multi-touch input can be achieved with two step operations corresponding to the "pick state" and "up" state.

After the object 250 is picked up from the idle mode screen by the first type multi-touch input as described with reference to FIGs. 2 to 4, the device controls the picked-up object 250 to disappear from the idle mode screen as shown in FIG. 5. At this time, the device can store the object or macro information of the picked-up object 250 to call the picked-up object 250 hereinafter within a storage. An explanation of how to store the picked-up object is described with reference to FIG. 6.

Referring to FIG. 6, the picked-up object 250 disappeared from the idle mode screen 100 as a result of the action taken in response to the first type multi-touch input is stored in a specific region of the storage . At this time, the pick-up object 250 is stored in the form of a stack. In case that multiple objects are picked up from the idle mode screen 100 in series, these objects are stacked preferably in order of pickup selection, but the invention is not limited to any set order.

In an exemplary case of FIG. 6, three picked-up objects are stored in order of object 2, object 4, and object 1. This means that the user has picked up the object 2, object 4, and object 1 in sequential order by doing the first type multi-touch inputs with the pickup gesture. In an exemplary embodiment of the present invention, if the second type multi-touch input is detected while the three objects are stored in this order, the object 2, object 4, and object 1 can be called to appear on the idle mode screen 100 at the same or one by one in reverse stacked order from the most recently stored object 1. Also, the objects stored in stack can be called to appear in order of object 1, object 4, and object 2 by the second type multi-touch inputs.

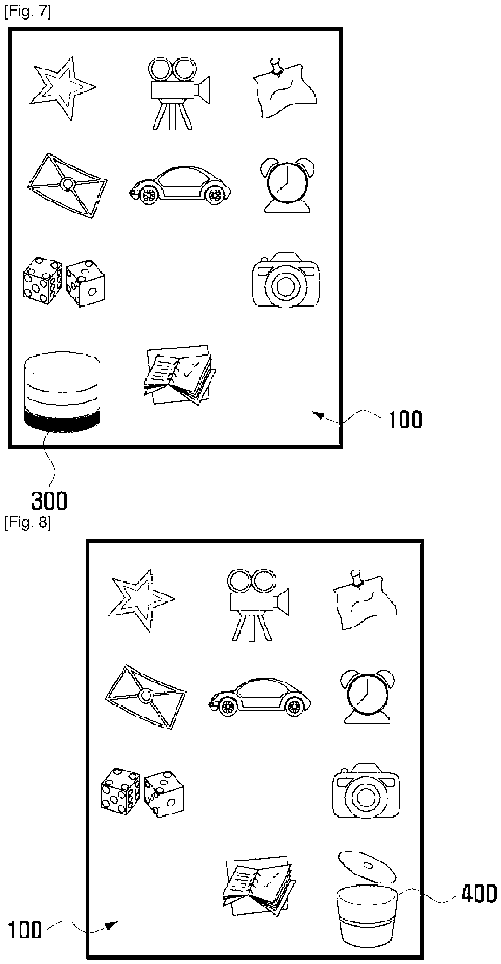

FIGs. 7 to 9 are diagrams illustrating exemplary screen images having supplementary function items related to an object management method according to an exemplary embodiment of the present invention.

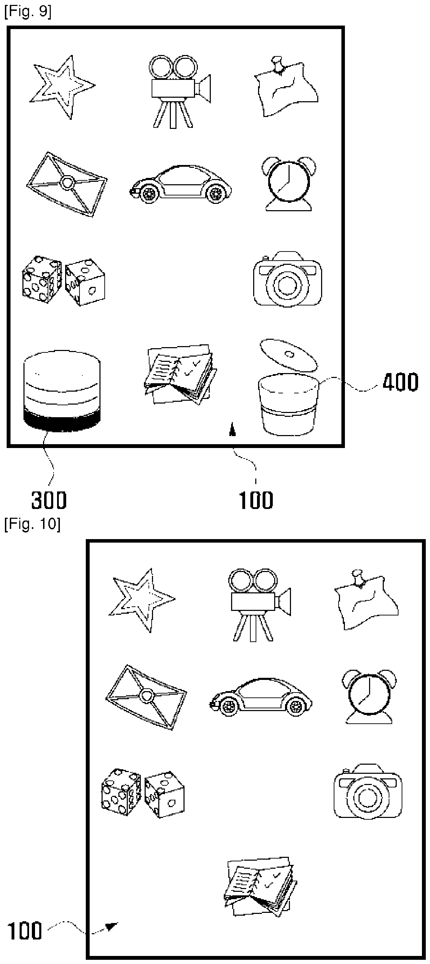

FIG. 7 shows an exemplary screen image displayed when the first type multi-touch input for picking up an object is detected. As shown in FIG. 7, when a multi-touch input is detected, a pickup status indication item 300 appears on the screen. FIG. 8 shows another exemplary screen image in which a recycling bin item 400 is displayed such that the user can delete an object by picking up the object and then releasing the picked-up object on the recycling bin item 400. FIG. 9 shows an exemplary screen imaged in which the pickup status indication item 300 and the recycling bin item 400 are displayed.

The supplementary function items can be, for example, special objects providing supplementary functions. The pickup status indication item 300 can be an object showing the status of a database (DB) storing the objects picked up from the screen by the user doing the first type multi-touch input, and the recycling bin item 400 can be an object for deleting the objects picked up from the screen by releasing the picked-up object thereon. In another exemplary embodiment of the present invention, the supplementary function objects 300 and 400 can be configured to appear automatically when the first type multi-touch input is detected or called by a user request.

Referring now to FIG. 7, when at least one object is stacked in the storage in response to the first type multi-touch input, the device displays the pickup status indication item 300 on the idle mode screen. The pickup status indication item 300 shows the status of the database storing the picked-up objects in the form of a visual image of a stack in which the picked-objects are stacked. That is, the device controls the pickup status indication item 300 displayed at a corner of the idle mode screen with the visual effect in which the objects picked up in response to the first type multi-touch input are piled in the stack.

The pickup status indication item 300 can be configured to appear in response to a user request, or can automatically appear when the first type multi-touch input is detected. In case that the pickup status indication is configured to appear in response to a user request, it can be called by a specific menu item, a key, or a touch event designated for calling the pickup status indication item 300.

Referring now to FIG. 8, when the recycling bin item 400 is provided in the idle mode screen, the object picked up with the first type multi-touch input by using the function of the recycling bin item 400. The recycling bin item 400 is provided in the form of a recycling bin image such that the user to delete the picked-up object by forming a predetermined gesture following the pick-up gesture. The recycling bin item 400 can be configured, for example, to appear when an object is picked up in response to the first type multi-touch input in order for the user to delete the picked-up object by releasing on the recycling bin item 400. The object deletion procedure using the recycling bin item 400 is described in more detail hereinafter.

The recycling bin item 400 can be configured to appear in response to the user request or automatically when the first type multi-touch input is detected according to the user settings. In case that the recycling bin item 400 is configured to appear in response to the user request, the user can call the recycling bin item 400 by means of a menu option, a shortcut key, or a touch event designated for calling the recycling bin item 400.

Referring now to FIG. 9, the pickup status indication item 300 of FIG. 8 and the recycling bin item 400 can be provided on the idle mode screen simultaneously. As aforementioned, these items can be configured to appear in response to the user request or automatically when the first type multi-touch input is detected, according to the user settings.

The operations for making the first type multi-touch input and handling the object picked by the first type multi-touch input have been described with reference to examples shown in FIGs. 2 to 5, 6, and 7 to 9. The operations for making the second type multi-touch input and releasing the object according to the second type multi-touch input are described hereinafter with reference to FIGs. 10 to FIG. 12 and 13 to 16.

FIGs. 10 to 12 are diagrams illustrating exemplary screen images for explaining steps of an object release procedure of an object management method according to an exemplary embodiment of the present invention.

FIGs. 10 to 12 show the exemplary operations of releasing the object, picked up as described with reference to FIGs. 2 to 5, at a position on the idle mode screen.

FIG. 10 shows the idle mode screen where the object 250 has disappeared as a result of the first type multi-touch input made by the pickup gesture as described with reference to FIGs 2 to 5. Here, the pickup status indication item 300 can be displayed at a position on the idle mode screen 100 as shown in FIG. 7.

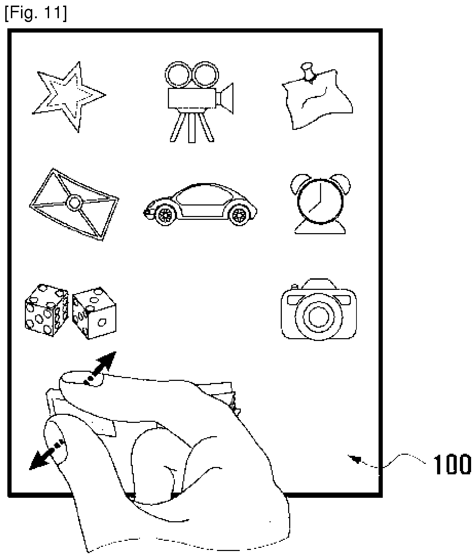

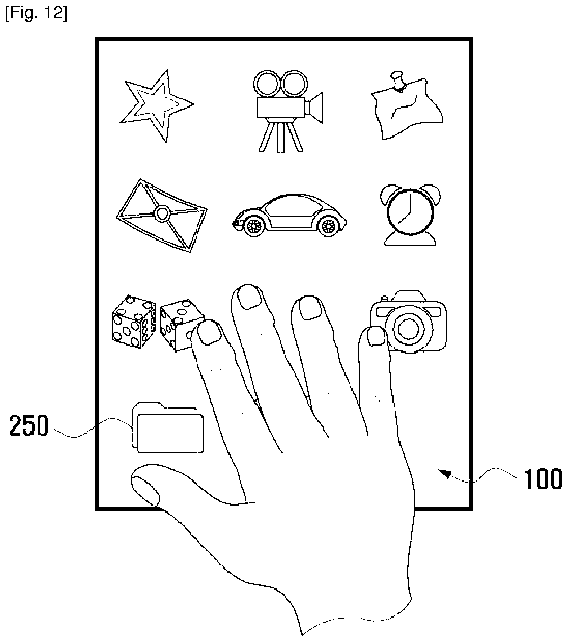

In this state, the user can place the picked-up object 250 at any position on the idle mode screen 100. In order to place the picked-up object 250 on the idle mode screen 100, the user makes a second type multi-touch input at the target position. The second type multi-touch input follows the first type multi-touch input as described with reference to FIG. 1, and the device calls the picked-up object 250 in response to the second type multi-touch input to appear with a release effect. The second type multi-touch input is made by a release gesture formed on the touchscreen as shown in FIGs. 11 and 12. Here, the release effect can be a visual effect in which the object that disappeared by the first type multi-touch input appears gradually at the position where the second touch input is made.

In more detail, if a release gesture is detected on the touchscreen, the device interprets the release gesture into the second type multi-touch input. The release gesture is formed, for example, by touching two points on the touchscreen and dragging the two touch points away from each other as shown in FIGs. 11. Once the second type multi-touch input is detected, the device releases the picked-up object to appear at the position where the second type multi-touch input is located with a visual effect. The outward drags of the two touch points following the first type multi-touch input is predetermined as the release gesture such that, when the two touch points are dragged away from each other, the device interprets this release gesture into the second type multi-touch input for releasing the picked-up object. When the picked-up object is released by the release gesture, the device can indicate the release of the object with a special effect. For instance, the released object can be presented with a fade-up effect in which the object appears gradually.

That is, the released object is presented at the position where the second type multi-touch input is made with a predetermined visual effect. If the second type multi-touch input is detected, the device calls the object picked up and disappeared, as shown in FIGs. 2 to 5, from the storage and controls the object to re-appear with the fade-up effect.

Once the object release procedure has completed, the released object 250 is displayed on the idle mode screen 100 as the result of the second type multi-touch input being executed. In case that the pickup status indication item 300 is provided on the idle mode screen, the shape of the pickup status indication item 300 is changed to indicate that the object 250 is taken out from the stack.

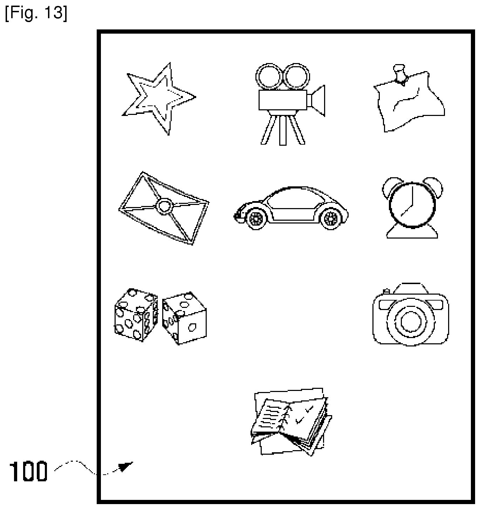

FIGs. 13 to 16 are diagrams illustrating exemplary screen images for explaining steps of an object release procedure of an object management method according to another exemplary embodiment of the present invention.

FIGs. 13 to 16 show the exemplary operations of deleting the picked-up object by releasing the picked-up object on the recycling bin item 400 provided in the idle mode screen. The object 250 picked up from the idle mode screen 100 as described with reference to FIGs. 2 to 5 can be deleted with the release gesture formed on the recycling bin item 400.

In FIG. 13, the picked-up object 250 has disappeared from the idle mode screen 100. Although not depicted in drawing, the recycling bin item 400 can be displayed at a position on the idle mode screen as shown in FIG 8, or at some other position on the screen. In the exemplary object release procedure to be described with reference to FIGs. 13 to 16, the recycling bin item 400 is called and displayed by the user request.

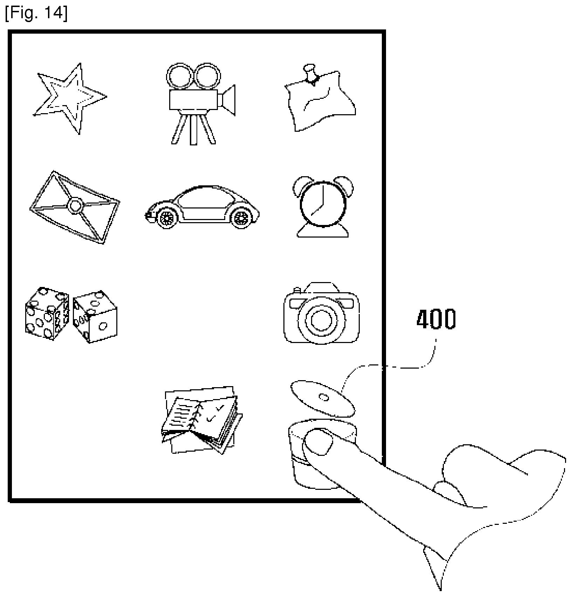

In order to delete the picked-up object 250 from the device, the user can make a series of touch gestures for the deletion to take place. As shown in the example in FIG. 14, the user first makes a recycling bin call gesture at a position on the idle mode screen 100. At this time, the recycling bin call gesture can be formed with a single touch point. Particularly in an exemplary embodiment of the present invention, the recycling bin call gesture is preferably formed by maintaining the contact over a predetermined period of time. If the recycling bin call gesture is detected at a position of the touchscreen, the device calls and displays the recycling bin item 400 at the position on which the recycling bin call gesture is detected. Although it is described that the recycling bin item 400 is called with the touch gesture, the recycling bin item 400 can be called by selecting a menu option, for example, or a specific key designated for calling the recycling bin item 400.

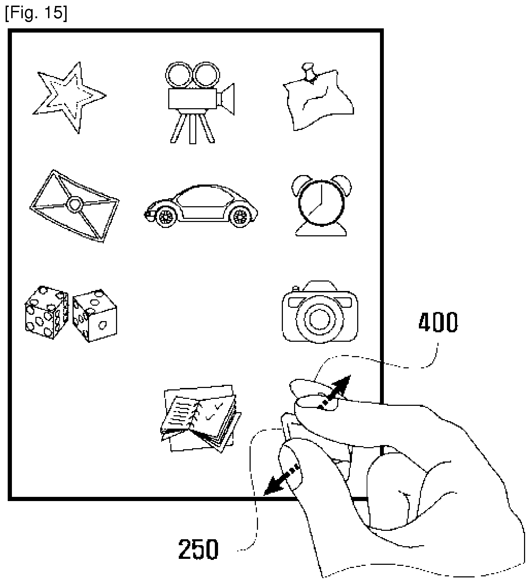

After the recycling bin item 400 is displayed on the idle mode screen, the user performs a release gesture on the recycling bin item 400. The release gesture in this example is formed by touching two points on the touchscreen and dragging the two touch points away from each other as shown in FIG. 15. Once the release gesture is detected, the device interprets the release gesture into the second type multi-touch input as described with reference to FIG. 1. Next, the device calls the picked-up object 250 in response to the second type multi-touch input and performs an operation designated for the second type multi-touch input on the recycling bin item 400 with a predetermined release effect. The release effect can be a fade-down effect in which the object 250 released on the recycling bin item disappears gradually.

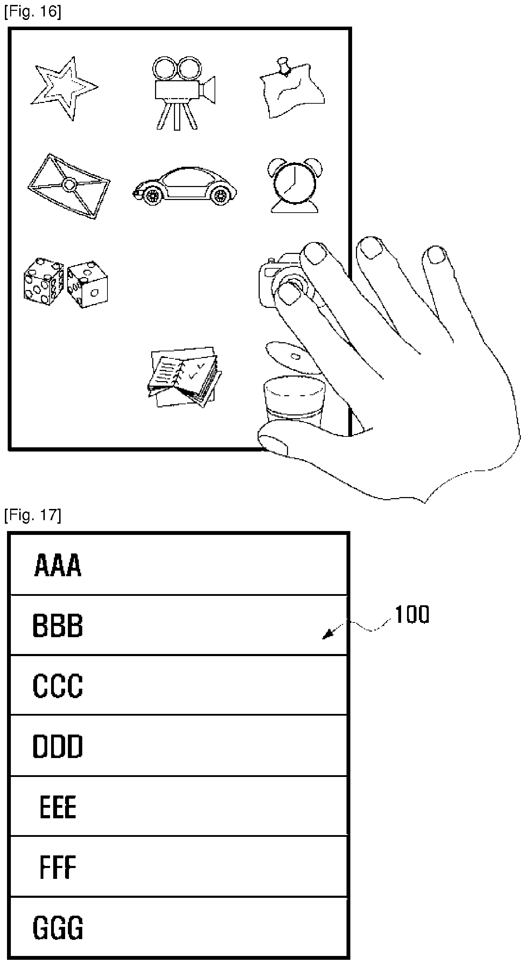

In more detail, if the release gesture is detected on the recycling bin item 400, the device interprets the release gesture into an object deletion command. Here, the release gesture is formed by touching two points on the touchscreen and dragging the two touch points away from each other, as shown in FIGs. 15 and 16. Once the object deletion command is recognized, the device calls the picked-up object 250 from the storage and deletes the called object 250 with a predetermined visual effect on the recycling bin item 400.

Since the release gesture on the recycling bin item 400 is interpreted as the object deletion command, the object deletion command is executed with the visual effect as if the released object discarded into a physical recycling bin. For instance, the visual effect can be rendered such that the lid of the recycling bin is opened and the released object is dumped into the recycling bin.

That is, the device calls the object 250 picked up and stored as described with reference to FIGs. 2 to 5 from the storage and, then performs an operation deleting the called object 250 with a predetermined visual effect in response to the deletion command input by the release gesture formed on the recycling bin item 400, as shown in FIGs. 15 and 16. At this time, the visual effect can be implemented with an action in which the object is dumped into the recycling bin. Accordingly, the user can recognize the deletion of the selected object intuitively.

Once the object deletion procedure has completed, the idle mode screen 100 displays the status prior to the release gesture being detected. In case that the pickup status indication item 300 is provided on the idle mode screen 30, the shape of the pickup status indication item 300 is changed to indicate the deletion of the object from the stack.

FIGs. 17 to 21 are diagrams illustrating exemplary screen images for explaining steps of a listed object pickup exemplary procedure of an object management method according to an exemplary embodiment of the present invention.

Referring now to FIGs. 17 to 21, the device displays a menu list 100 of items from which a choice made in response to the user request as shown in FIG. 17. In an exemplary embodiment of the present invention, the menu list and the items of the menu list correspond to objects. In the description with reference to FIGs. 17 to 21, each item of the menu list 100 is called as an object.

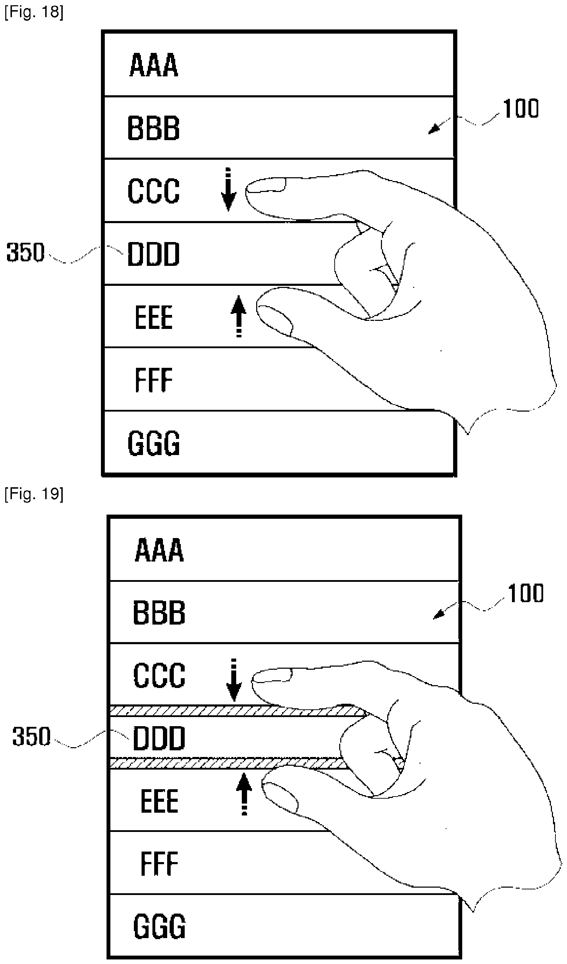

While the menu list 100 is displayed, the user can perform a pick gesture to an object of the menu list 100 on the touchscreen as illustrated in FIGs. 18 to 20. The pick gesture is interpreted into a first type multi-touch input to select an object 350 of the menu list 100. Once the first type multi-touch input is interpreted from the pick gesture to the object 350, the device selects the object 350 with a pick effect.

The pick effect can be a visual effect showing that the object 350 is held between two fingers on the menu list 100. Also, the pick effect can be a visual effect showing the progress in which the height of the object 350 decreases such that the object 350 disappears gradually.

In more detail, if the pick gesture is detected on the object 350 of the menu list 100, the device interprets the pick gesture into the first type multi-touch input for selecting the object 350. The pick gesture is formed by touching two points on the touchscreen and dragging the two touch points to approach each other as illustrated, for example, in FIGs. 18 to 20. Once the object 350 is selected in response to the first type multi-touch input interpreted from the pick gesture, the device registers the object 350 in a pick state.

As previously disclosed, if the two touch points are made and then dragged to approach with each other, the device detects the pick gesture and interprets the pick gesture into the first type multi-touch input for selecting an object. When the object is selected in response to the first type multi-touch input, the device preferably controls the object to be shown with a visual effect to indicate the selection of the object. For instance, the device can control the selected object to be shown with a highlight effect or an animation effect.

While the object 350 is selected with the pick gesture, the user can also, for example, make an up gesture. The up gesture is formed by releasing the contacts at the two touch points made by the pick gesture from the touchscreen. If an up gesture is detected, the device registers the object 350 in an up state.

Once the up gesture is detected, the device interprets the up gesture into a command for storing the selected object temporarily and stores the picked-up object 350 with an up effect.

The up effect can be, for example, a visual effect showing that the object held between two fingers according to the pick effect is drawn up from the menu list 100. At this time, another effect can be applied to show the object is taken out of the menu list. For instance, while being lifted with the up effect, the object 350 disappears from the menu list 100 and other objects are then shifted up or down to occupy the position from of the disappeared object.

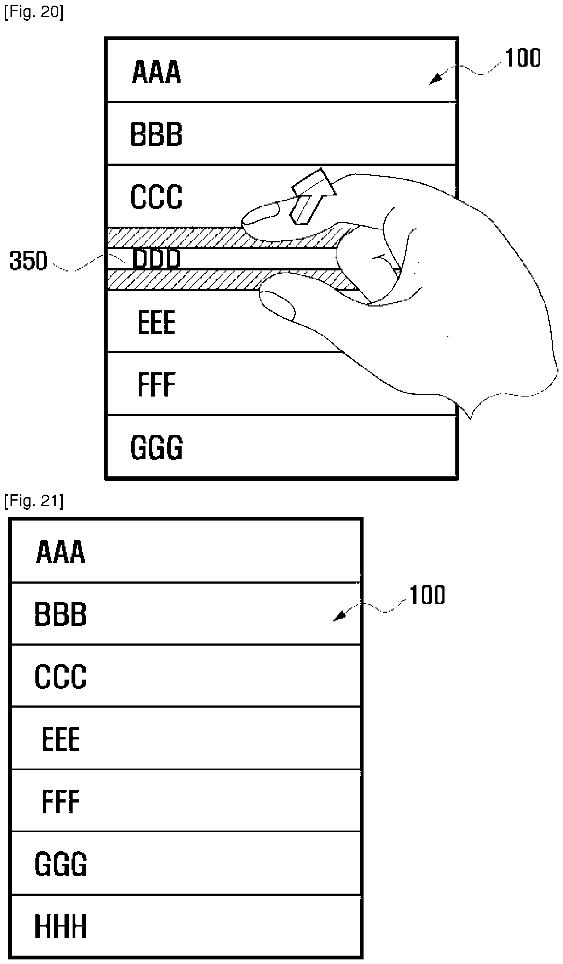

As a consequence of the operations described with reference to FIGs. 18 to 20, the object 350 has been picked up and is in the up state, such that the refreshed menu list in which the picked-up object 350 is removed and other objects are shifted up or down to fill the empty position is displayed, as shown in FIG. 21.

Explaining with the exemplary screen images of FIGs. 17 to 21 again, the object "DDD", which is shown in the menu list of FIG. 17, is picked up in response to the pick-up gesture so as to be removed from the menu list and thus not shown in the menu list of FIG. 21. As a consequence, the objects listed below the object "DDD" are shifted such that the object "EEE" occupies the position where the object "DDD" is removed and the object "HHH" then appears in the menu list 100.

The device stashes the picked-up object 350 and/or the macro information for calling the picked-up object 350 in a storage. The picked-up object 350 can be stored in the form of a call stack as previously described with reference to FIG. 6.

The object pickup procedure described with reference to FIGs. 17 to 21 can further include the operations related to the supplementary function described with reference to FIGs. 7 to 9.

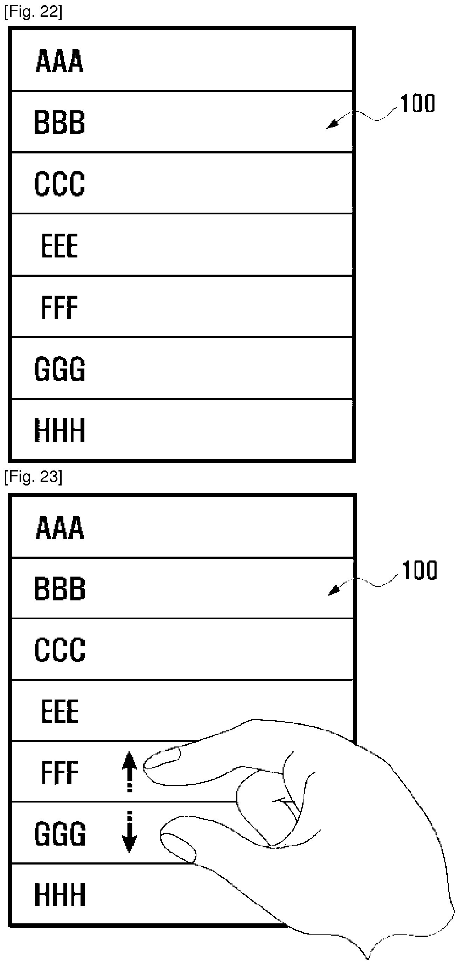

The object pickup procedure related to the menu list in which an object is picked in response to the first type multi-touch input interpreted from the pick gesture and the picked object is stacked in storage in response to the command from the up gesture has been described with reference to FIGs. 17 and 21. An object release procedure in which the object picked up through the operations described with reference to FIGs. 17 to 21 is called and released is described with reference to FIGs. 22 to 25.

FIGs. 22 to 25 are diagrams illustrating exemplary screen images for explaining steps of a listed object release procedure of an object management method according to another exemplary embodiment of the present invention.

Referring to FIG. 22 to 25, the object picked up through the operations described with reference to FIGs. 17 to 20 is released at a position in the menu list.

FIG. 22 shows the menu list from which the object 350 picked up through the operations described with reference to FIGs. 17 to 20 has disappeared. At this time, a pickup status indication item 300 (see FIG. 7) can be displayed at a position of the menu list 100 to indicate the status of the picked-up object 300.

While the menu list from which the picked-up object 350 has disappeared is still displayed, the user can call the picked-up object 350 to be placed at a specific position on the menu list. In order to release the picked-up object 350, the user makes a release gesture on the touchscreen at a specific position of the menu list, such as shown in FIG. 23. The release gesture is interpreted into a second type multi-touch input to place the picked-up object at a position where the release gesture is detected. Once the second type multi-touch input is detected, the device calls and releases the picked-up object 350 with a release effect. The release effect can be, for example, a visual effect showing that the called object 350 is appearing gradually with its original shape.

In more detail, if a release gesture is detected at a position of the menu list as shown in FIG. 23, in this example the device interprets the release gesture into the second type multi-touch input for releasing the object 350 at the position whether the release gesture is detected. The release gesture is formed by touching two points on the touchscreen and dragging the two touch points away from each other as illustrated, for example, in FIGs. 23 to 25. Once the second type multi-touch input recognized, the device registers calls the picked-up object 350 and displays the called object 350 at the position where the release gesture is detected with the release effect.

As previously discussed herein above, if the two touch points are made and then dragged away from each other, the device detects the release gesture and interprets the release gesture into the second type multi-touch input for placing the picked-up object at the position where the release gesture is detected. When the picked-up object 350 is released in response to the second type multi-touch input, the device can control the object 350 to appear with a visual effect to indicate the release of the object 350. For instance, the device can control the object to appear with a fade-up effect in which the object appears gradually.

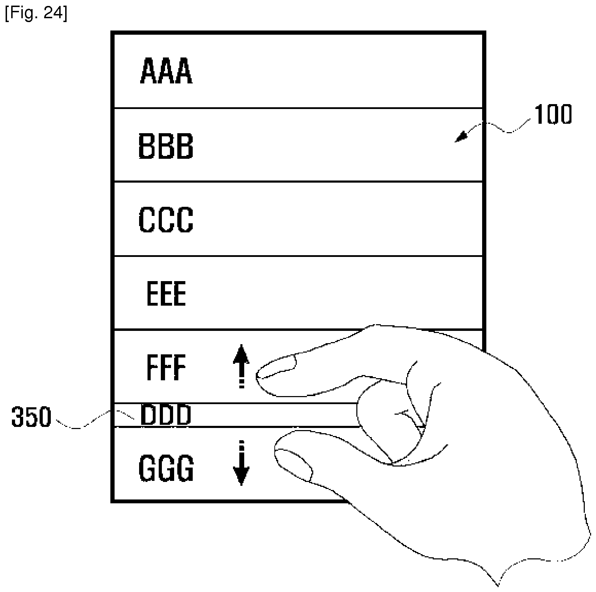

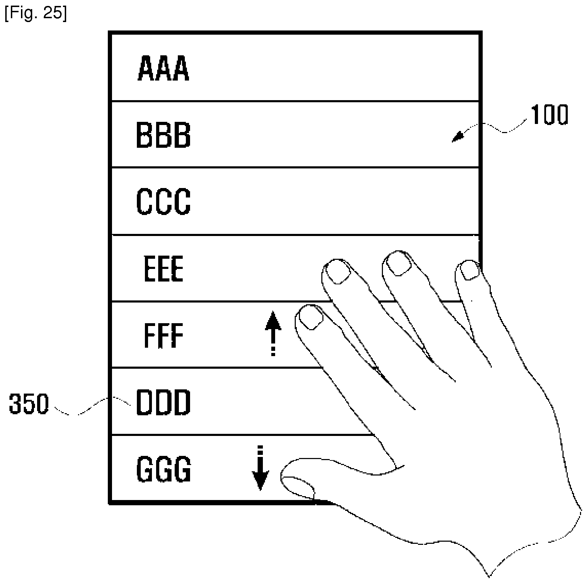

While the object 350 is released at the position where the release gesture is detected, the device can control such that the object 350 appears at the position with a visual effect. As shown in the exemplary screen image of FIGs. 24 and 25, the released object 350 can appear between the objects FFF and GGG with the visual effect in which the distance between the objects FFF and GGG is widen gradually.

In other words, once the release gesture is detected at a position on the menu list 100, the device interprets the release gesture into the second type multi-touch input for placing the picked-up object 100 at the position where the release gesture is detected so as to call the picked-up object 350 from the storage. If the picked-up object 350 exists in the storage, the device controls the called object 350 appears at the position where the release gesture is detected with the visual effect, such as shown in the examples of FIGs. 24 and 25.

Once the object release procedure has completed through the above described operations, the menu list 100 can be refreshed to show the list has the released object 350. In the case where the pickup status indication item 300 (see FIG. 7) is provided at a position of the menu list 100, the pickup status indication item 300 can be controlled to change in shape with a visual effect to indicate the removal of the released object 350 from the stack.

Although not previously discussed herein above, the object release procedure described with reference to FIGs. 22 to 25 can further include the operations related to the supplementary function described with reference to FIGs. 13 to 16.

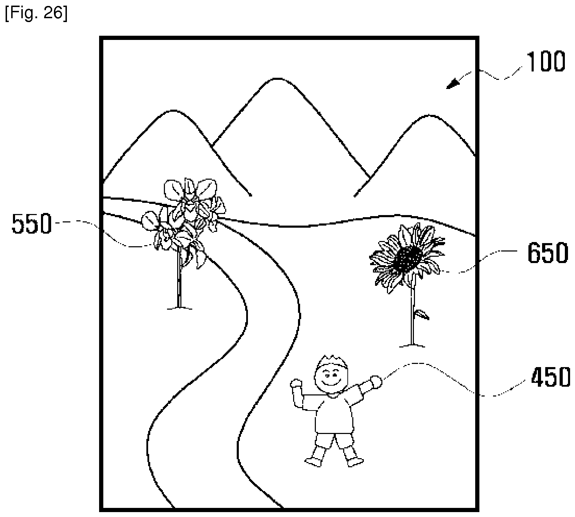

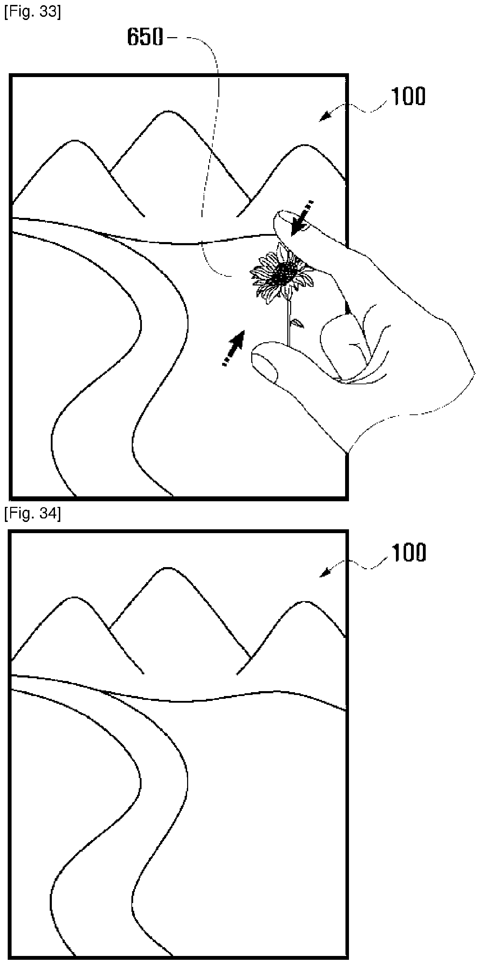

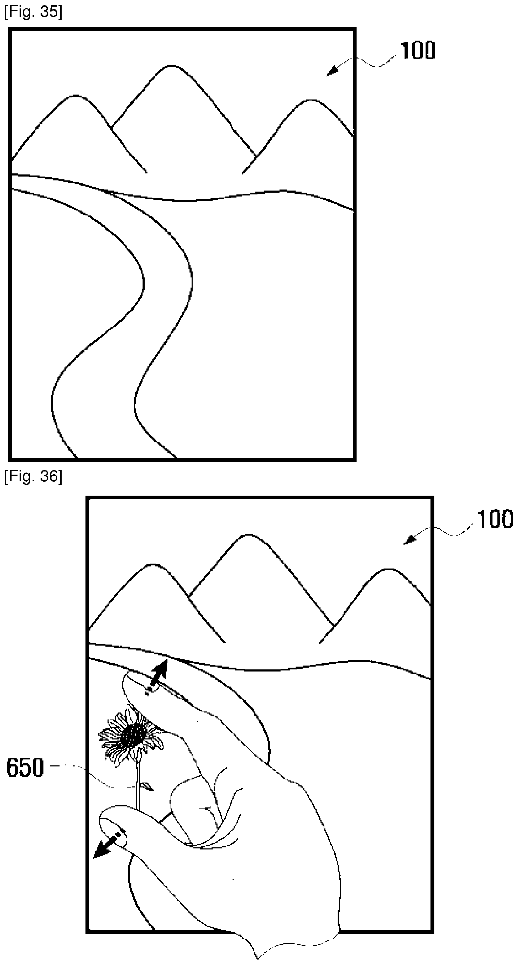

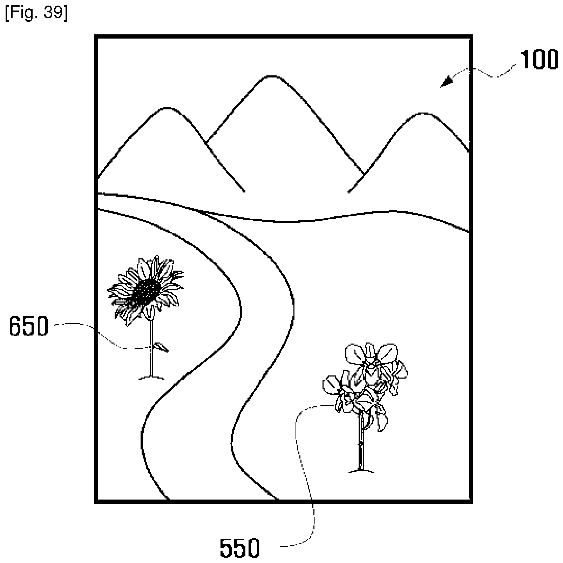

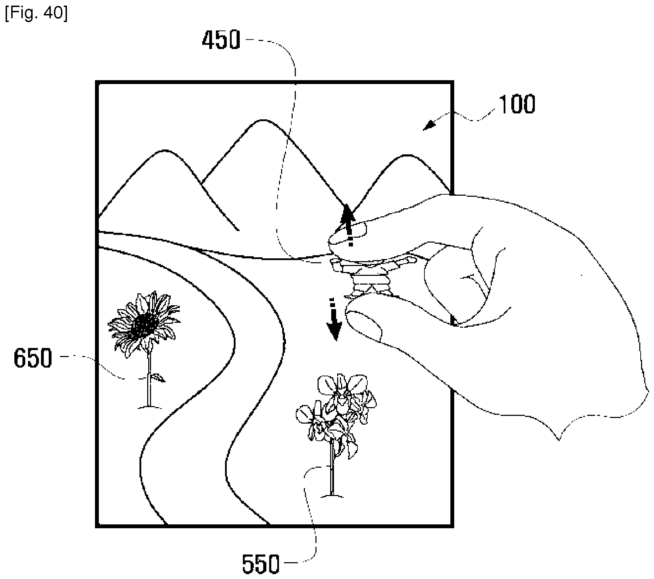

FIG. 26 to 34 are diagrams illustrating exemplary screen images for explaining steps of a multiple objects pickup procedure of an object management method according to an exemplary embodiment of the present invention. It is to be understood, as the inventors have previously noted that the examples do not limit the claimed invention to the exemplary screen images shown and described. Particularly in an exemplary embodiment of the present invention to be described with reference to FIGs. 26 to 34, multiple objects displayed on the screen are picked up by the user making the pickup gesture repeatedly and are then repositioned as shown in FIG. 35-41.

Referring to FIGs. 26 to 34, the device displays an image on the screen in response to the user request. Here, the image includes at least one image component. The image and at least one image component are handled objects in the exemplary embodiment of the present invention. In the description with reference to FIGs. 26 to 34, each image component comprising the image 100 is called as an object.

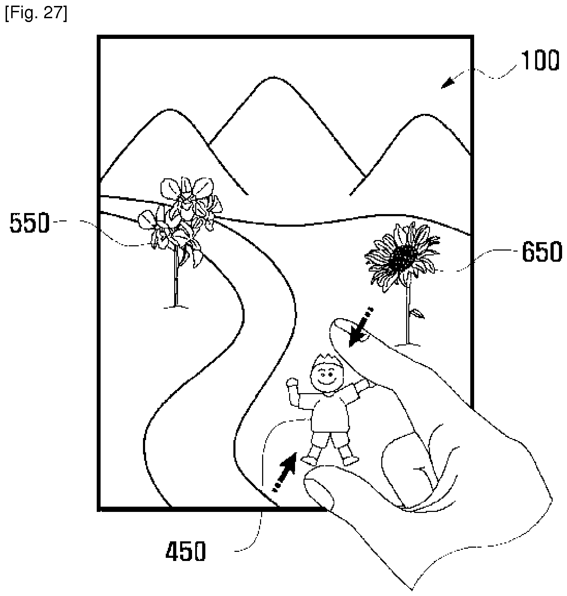

While the image 100 is displayed as shown in FIG. 26, the user first makes a pickup gesture to a first object 450 as shown in FIGs. 27 to 29. As aforementioned, the pickup gesture is interpreted into a first type multi-touch input by the device. The user can make the pickup gesture to the individual objects 450, 550, and 650 of the image 100. If the pickup gesture is detected at the position where the first object 350 is located, the device selects the first object 450 with a pickup effect.

The pickup effect may comprise a visual effect showing that the first object 450 is held between two fingers and drawn up to be suspended from the fingers. The pickup effect can include further include the effect in which the first object 450 shrinks so as to disappear gradually from the image 100.

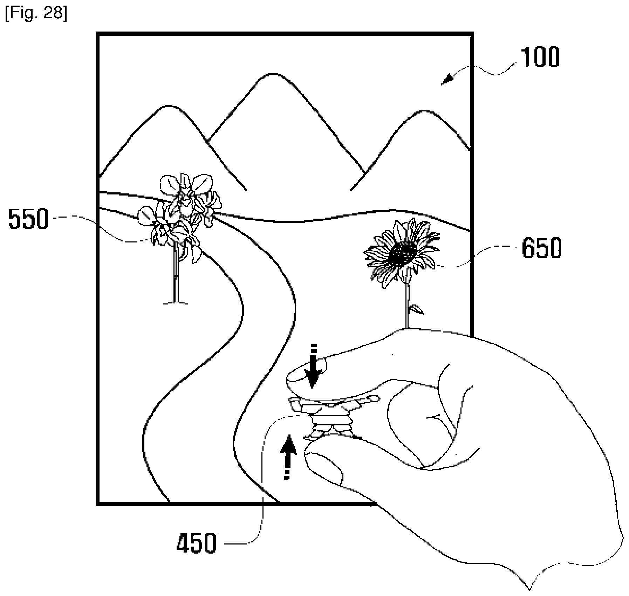

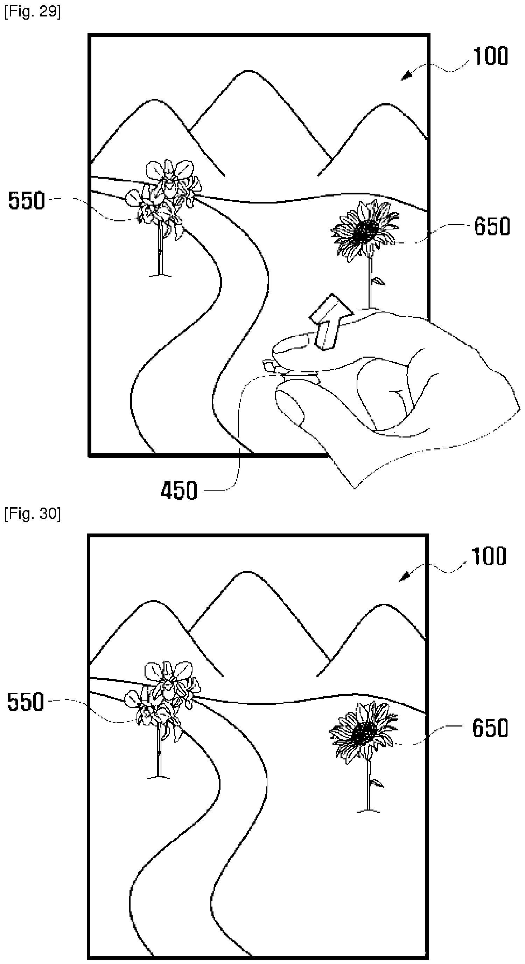

That is, if the pickup gesture is detected at a position where an object is located, the device interprets the pickup gesture into the first type multi-touch input for selecting the object and storing the object in a storage. The pickup gesture is formed by touching two points on the touchscreen (FIG. 27), dragging the two touch points to approach with each other (FIG. 28), and releasing the touch points (FIG. 29). If the two touch points are placed around the first object 450 and then dragged to approach with each other, the device selects the first object 450 and registers selected first object 450 in a pick state. Thereafter, if the two touch points are released, e.g. if the user lift the fingers off the touchscreen, the device stores the first object 450 in the storage and registers the stored first object 450 in an up state. That is, if the pickup gesture has completed, the device withdraws the first object 450 from the image 100 and stacks the withdrawn first object 450 in the temporary storage.

Once the pickup gesture is detected on an object distributed on an image, the device interprets the pickup gesture into a command for withdrawing the object from the image and stacking the object in a predetermined storage with a predetermined pickup effect. For instance, the pickup effect can include a visual effect showing that the selected object is held between two fingers and then drawn up. The pickup effect can further include another visual effect in which the selected object disappears gradually from the image. A person of ordinary skill in the art should understand and appreciate that in any of examples previously described or to be shown and described infra, an audio effect may accompany the visual effect, or may be used in lieu of a visual effect.

After the first object 450 has been withdrawn from the image 100 through the operations described with reference to FIG.s 27 to 29, the image 100 is refreshed so as to be displayed without the first object 450 as shown in FIG. 30. At this time, the device can store the first object 450 and/or the macro information on the first object 450 in the storage.

After the first object 450 is withdrawn from the image 100 as shown in FIG. 30, the user can withdraw the second object 550 and the third object 650 selectively with the repeated pickup gestures. In case that multiple objects are withdrawn from the image in series, the device can store the withdrawn objects or the macro information for calling the withdrawn objects in picked-up order. The objects withdrawn from the image can be stored in the form of call stack as described with reference to FIG. 6.

As described above, the object management method according to an exemplary embodiment of the present invention allows the user to withdraw the objects composing an image repeatedly with a series of pickup gestures and stores the objects withdrawn from the image in picked-up order. That is, the device can withdraw the first to third objects 450, 550, and 650 from the image 100 in response to a series of the first type multi-touch inputs according to the corresponding pickup gesture and store the withdrawn objects 450, 550, and 650 within the storage in sequential order.

Although the object pickup procedure is explained the exemplary case in that the first to third objects 450, 550, 650 are picked up and then stored in the storage, the first type multi-touch input can be applied to the image itself, whereby, if the pickup gesture is made to the image, the device interprets the pickup gesture into the first type multi-touch input for picking up the image and picks up and stores the image in the storage. That is, the device can recognize the background image or a blank screen as an object and pick up the entire background or the blank screen, or a portion thereof.

When the background image is picked up as an object in response to the first type multi-touch input, the pickup action can be expressed with a visual effect such as roll-up effect in which the picked up background image is rolled up to be replaced by a blank screen. Also, if the blank screen is picked up as an object in response to the first type multi-touch input, the pickup action can be expressed with the roll-up effect such that the picked up blank screen is rolled up to be replaced by a background image.

The multiple objects pickup procedure described with reference to FIGs. 26 to 34 can further include the operations related to the supplementary function such as described with reference to the examples shown in FIGs. 7 to 9.

The aforementioned multiple objects pickup procedure in which multiple objects 450, 550, and 650 are picked up from an image in response to a series of first type multi-touch input interpreted from the pickup gesture and the picked-up objects are stacked in picked-up order within the storage has been described with reference to FIG.s 26 to 34. A multiple objects release procedure in which the objects picked up and stacked in the picked-up order through the operations described with reference to FIGs. 26 to 34 are called and released will now be described with reference to FIGs. 35 to 41.

FIGs. 35 to 41 are diagrams illustrating exemplary screen images for explaining steps of a multiple object release procedure of an object management method according to an exemplary embodiment of the present invention. Particularly in an exemplary embodiment of the present invention to be described with reference to FIGs. 35 to 41, multiple objects picked up and stacked within a storage in a picked-up order are then released in reverse order.

Referring now to FIGs. 35 to 41, the device displays an image from which the objects 450, 550, and 650 composing the image 100 have been withdrawn to be stacked in the storage through the operations described with reference to FIGs. 26 to 34.

FIG. 35 shows the image 100 remained after the objects 450, 550, and 650 composing the image 100 have been picked up and stacked in the storage. In this state, the pickup status indication item 300 that described with reference to the example shown in FIG. 7 can be displayed at a position on the image 100.

While the empty image 100 is displayed, the user can call the objects 450, 550, and 650 picked up to be withdrawn from the image 100 and stacked in the storage in reverse order to be placed at target positions on the image 100.

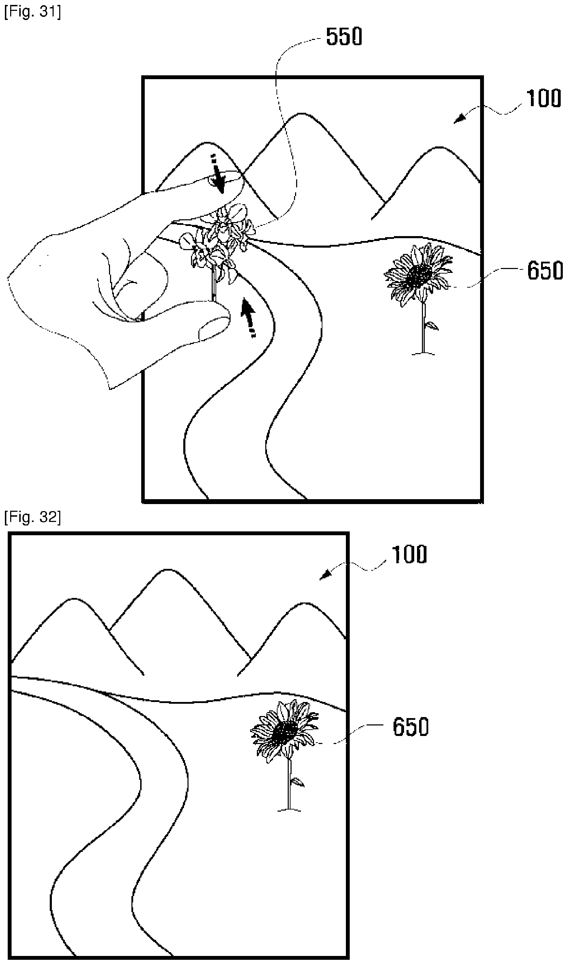

That is, the user can make a release gesture at a position on the image 100, such as shown in the examples in FIGs. 36 to 37. If the release gesture is detected, the device interprets the release gesture into the second type multi-touch input instructing to call an object and place the called object at the position where the release gesture is detected with a predetermined release effect. At this time, the objects 450, 550, and 650 are called in reverse order of pickup such that the third object 650 is called first to be released. The release effect may include, for example, a fade-up effect in which the third object 650 withdrawn most recently from the image (see FIGs. 32 to 34) appears gradually at the position at which the release gesture is detected.

In more detail, if the release gesture is detected at a position on the touchscreen, the device interprets the release gesture into the second type multi-touch input instructing to call the object most recently withdrawn from the image and place the called object at the position on which the release gesture is detected. The release gesture is formed by touching two points on the touchscreen and then dragging the two touch points away from each other. Once the release gesture is detected, the device retrieves the object that is most recently stacked in the storage, i.e. the third object 650, and places the retrieved object 650 at the position where the release gesture is detected with the release effect.

As previously discussed herein above, for explanatory purposes, if the two touch points are made on the touchscreen and then dragged away from each other, in this example the device detects this gesture as the release gesture for placing the most recently withdrawn object at the position where the release gesture is detected. Once the third object 650 is retrieved as the most recently withdrawn object, the device places the third object 650 at the position on where the release gesture is detected with a predetermined visual effect. For instance, the third object 650, in this particular example, is faded up gradually to 100 % opacity.

If the object release operation has completed, the image 100 is refreshed with the third object 650 placed at the position where the release gesture is detected in response to the second type multi-touch input. In case that the pickup status indication item 300 is activated, the pickup status indication item 300 changes in shape to indicate the status of a stack representing the storage in which the third object 650 has disappeared and the first and second objects 450 and 550 are remained.

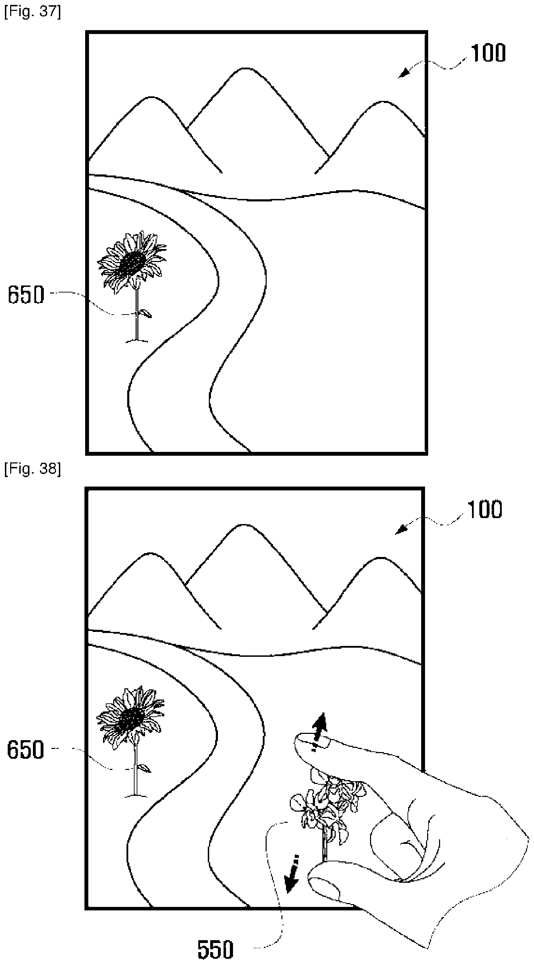

While the image 100 having the third object 650 is displayed as shown in FIG. 37, the user can make the release gesture repeatedly on the image as shown in FIGs. 38 to 41 in order to place the second object 550 and the first object 450 in series. At this time, the first and second objects 450 and 550 are called in reverse order of pickup such that the second object 550 is called first and then the first object 450 is.

As described above, in an exemplary embodiment of the present invention, the multiple objects picked up are removed from the image and stacked in the storage, and can be called to be displayed on the image again in series in reverse order of pickup. That is, the device calls the objects in order of the third, second, and first objects in response to a series of the second type multi-touch inputs.

In addition, the multiple objects release procedure described with reference to FIGs. 35 to 41 can further include, for example, the operations related to the supplementary function described with reference to FIGs. 13 to 16. For instance, in order to delete the second object 550, the user makes a series of touch gestures as shown FIGs. 14 to 16 such that the device calls the recycling bin item 400 in response to the touch gesture of FIG. 14 and deletes the second object 550 in response to the release gesture made on the recycling bin item 400 as shown in FIGs. 15 and 16. Sequentially, the user can make the release gesture such that the device calls the first object 450 and places the first object 450 at the position where the release gesture is detected. As a consequence, the finally displayed image has the first and third objects 450 and 650.

As described above, the multiple objects release procedure according to an exemplary embodiment of the present invention allows the user to edit the image composed of the objects intuitively with the multi-touch inputs established by a series of the pickup and release gestures.

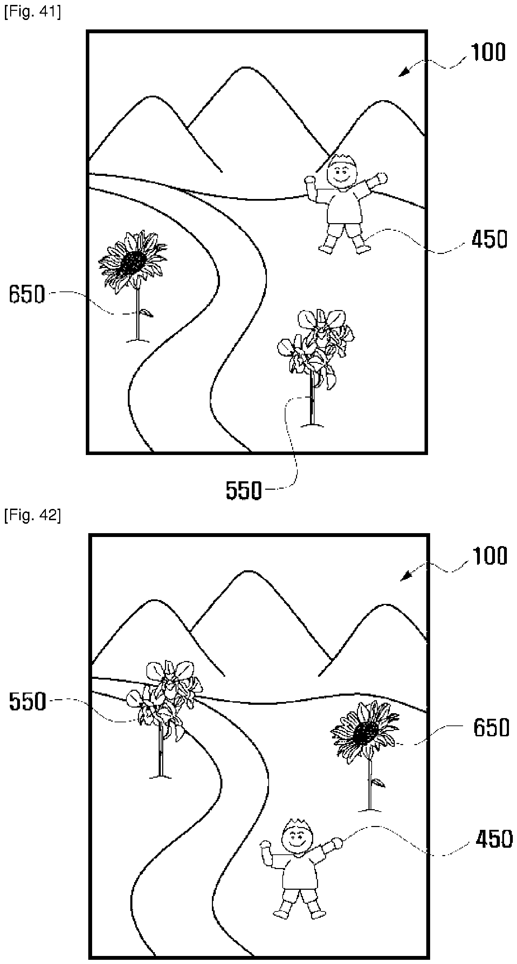

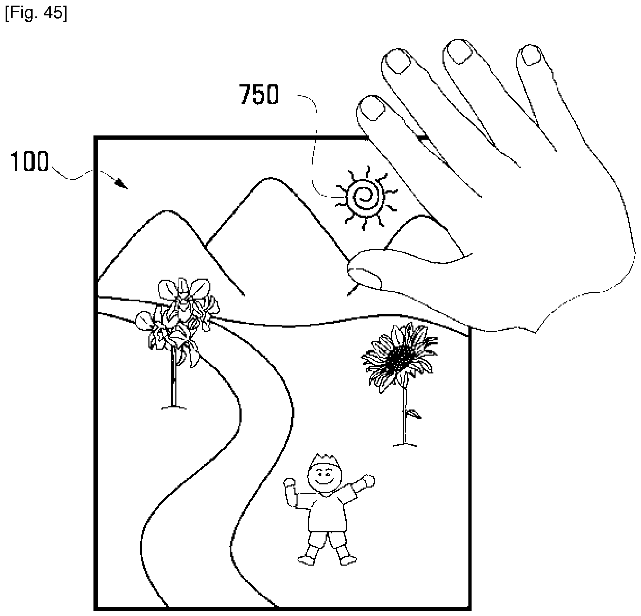

FIGs. 42 to 45 are diagrams illustrating exemplary screen images for explaining steps of an image edit procedure of an object management method according to an exemplary embodiment of the present invention. In an exemplary embodiment of the present invention to be described now with reference to FIGs. 42 to 45, the user can decorate an image by picking up an object provided for editing the image with the pickup gesture and placing the picked-up the object at a position on the image with the release gesture.

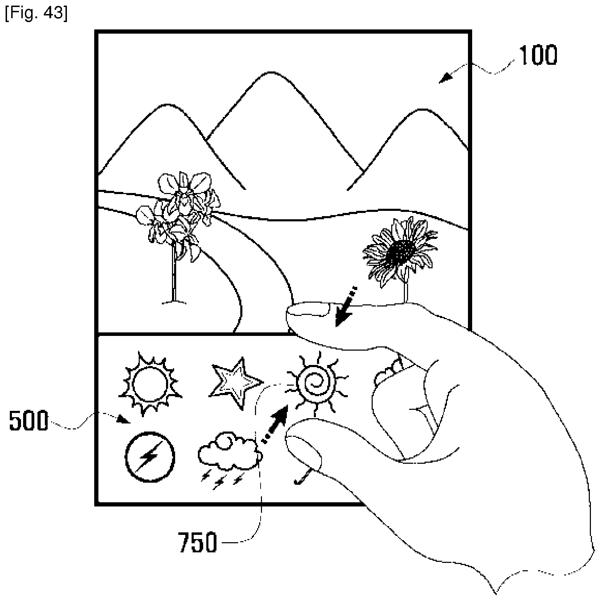

Referring to FIGs. 42 to 45, the device displays an image 100 in response to a user request as shown in FIG. 42. While the image 100 is displayed, the user can call an edit tool box 500 having a plurality of graphic objects as shown in FIG. 43. The edit tool box 500 can be called by the user selecting a menu option or a key designated for calling the edit tool.

Once the edit tool box 500 is called to be displayed on the screen, the user can select an object from the edit tool box 500. In the exemplary screen image of FIG. 43, the user selects the object 750. That is, if the user makes a pickup gesture to the object 750, the device interprets the pickup gesture made to the object 750 within the edit tool box 500 into the first type multi-touch input for selecting the object 750 and thus selects the object 750 with a predetermined pickup effect.

The pickup effect can be the same visual effect as described above. In this case, however, the picked-up object 750 does not disappear from the edit tool box 500, but is stored in the storage. A benefit is that the objects provided within the edit tool box 500 can be used repeatedly.

Once the object 750 has been picked up in response to the first type multi-touch input, the device stores the object 750 and/or the macro information for calling the object 750 within the storage.

Afterward, if the user makes a release gesture at a position on the image 100, the device interprets the release gesture into the second type multi-touch input for placing the picked up object 750 at the position where the release gesture is detected. Accordingly, the device calls the object 750 and places the called object 750 at the position where the release gesture is detected with a predetermined release effect. The release effect can be the same effect as described above, or a release different effect.

According to the series of the pickup and release gestures, the object 750 is selected from the edit tool box 500 and then places at a target position on the image 100 such that the image 100 is decorated with the object 500.

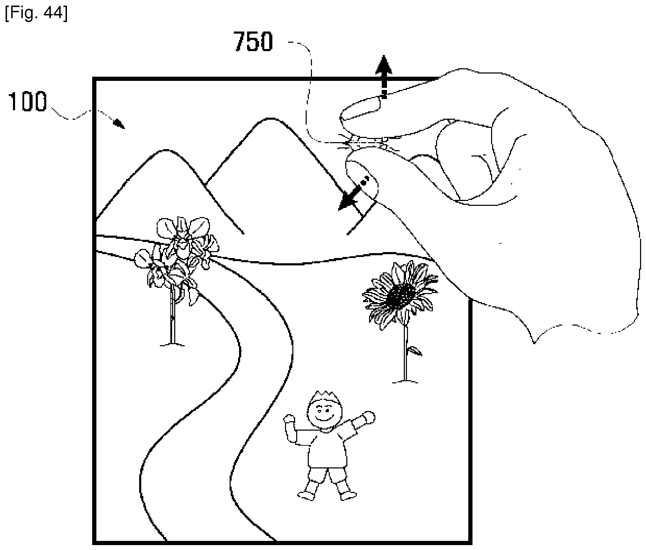

Although the edit tool box 500 disappears when the release gesture is made on the image in an exemplary screen image of FIG. 44, it can be maintained while the release gesture is made. That is, the edit tool box 500 can be configured to close down or open up in response to a user request before making the first and second type multi-touch inputs.

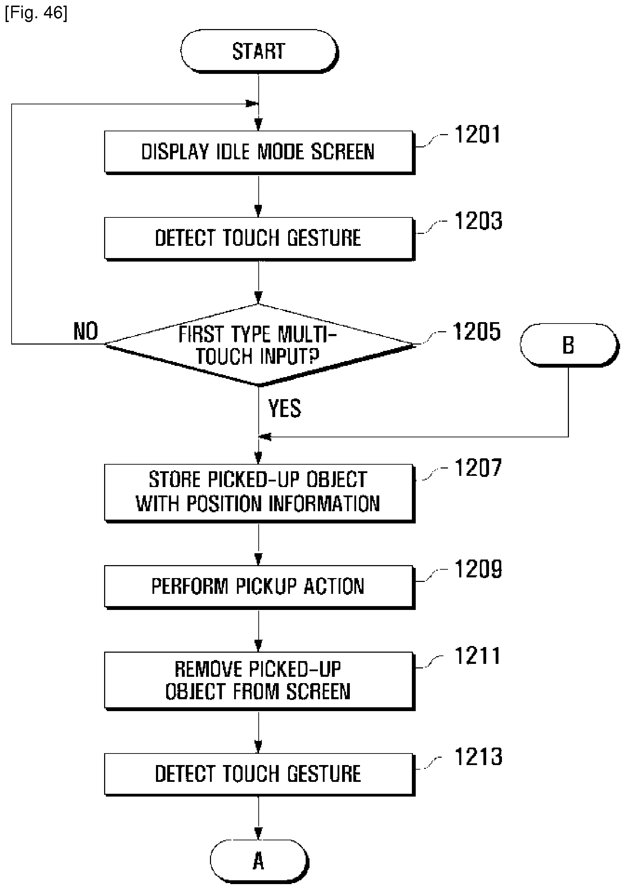

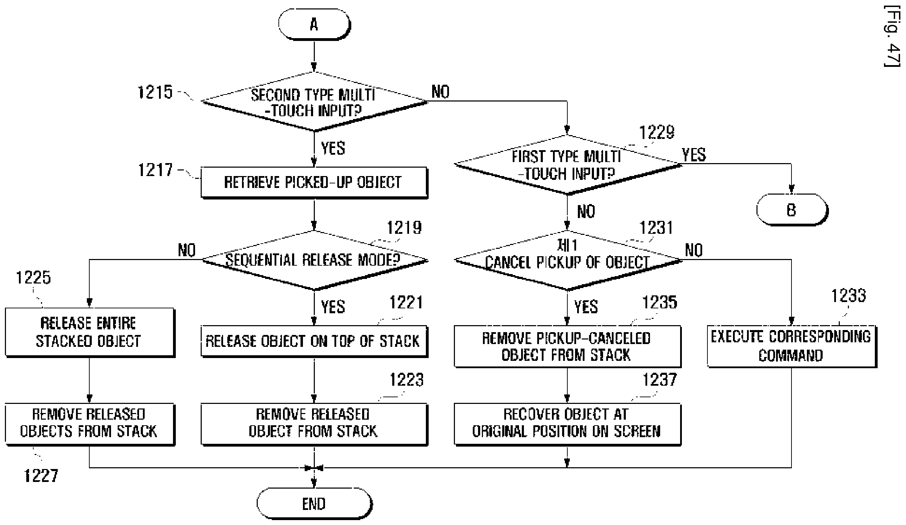

FIGs. 46 and 47 are a flowchart illustrating an object handling method according to an exemplary embodiment of the present invention.

Referring to FIGs. 46 and 47, the device displays the idle mode screen at power-on (1201). Afterwards, the device detects a touch gesture (1203) and interprets the touch gesture to determine whether the touch gesture corresponds to a first type multi-touch input (1205). Although it is depicted that the procedure returns to step 1201 when the touch gesture is not the first multi-touch gesture in FIG. 46, the procedure can further include steps determining whether the touch gesture is a second type multi-touch input and outputting an alert indicating an error when the touch gesture is determined as the second type multi-touch input. The operations to interpret the touch gesture are described in more detail hereinafter with reference to the drawings.

If it is determined that the touch gesture corresponds to the first type multi-touch input, the device picks up an object placed at the position where the touch gesture is detected and stores the picked-up object in a storage , i.e. a call stack (1207). Next, the device performs a pickup action to show the progress of withdrawing the object from the screen and storing the object in the storage (1209). For instance, the pickup action can be any of the actions described above in association with the first type multi-touch input. After completing the pickup action, the device controls the object to disappear from the displayed screen (1211).

Although the steps 1207 to 1211 are performed in sequential order as described above, the claimed invention is not limited thereto. That is to say, the order of steps 1207 to 1211 can be changed and at least two of steps 1207 to 1211 can be performed at the same time.

After the object is withdrawn from the screen and stored in the call stack in response to the first type multi-touch input, the device detects another touch gesture (1213) and interprets the touch gesture to determine whether the touch gesture corresponds to a second type multi-touch input (1215).

Referring now to FIG. 47, if it is determined that the touch gesture corresponds to the second type multi-touch input, the device retrieves the object withdrawn from the screen and stored in the call stack in response to the first type multi-touch input (1217). Next, the device determines whether the second type multi-touch input indicates a sequential release mode or a group release mode (1219).

If at step (219), the second type multi-touch input indicates the sequential release mode, the device calls the object placed on top of the stack and releases the called object with a release action (1221). For instance, the device can perform the release of the object with any of the actions described above in association with the second type multi-touch input. In the sequential release mode, the objects are called in reverse order of pickup. As the result of releasing the object placed on top of the call stack, the device removes the released object from the call stack (1223).

Otherwise, if the second type multi-touch input indicates the group release mode, the device calls all the objects stored in the call stack and releases the called objects at the same time (1225). As the result of releasing all the objects, the device removes all the released objects from the call stack (1227).

Returning to step 1215, if it is determined that the touch gesture does not correspond to the second type multi-touch input, the device then determines whether the touch gesture corresponds to the first type multi-touch input (1229). If it is determined that the touch gesture corresponds to the first type multi-touch input, the procedure returns to step 1207 in order to pick up an object placed at the position where the touch gesture is detected. At this time, the newly picked-up object is stacked on top of the call stack.

Otherwise, if it is determined that the touch gesture does not correspond to the first type multi-touch input, the device determines whether the touch gesture corresponds to a pickup cancel input (1231). The pickup cancel input can be a user request.

Still referring to FIG. 47, if it is determined that the touch gesture corresponds to the pickup cancel input, the device removes the object stacked on top of the call stack (1235). In case that multiple objects are stored in the call stack, the pickup cancel input can be configured to be applied to the object on top of the call stack such that the device can remove the objects stored in the call stack one by one in response to a series of pickup cancel inputs. Also, the pickup cancel input can be configure to be applied to all the objects stored in the call stack such that the device can remove all the objects stored in the calls stack at the same time in response to a single pickup cancel input.

After removing the target object from the call stack, the device recovers the object removed from the call stack at the position on the screen as it was (1237). In this example, the object recovery can be defined that the object returns back to the state before picking up in response to the first type multi-touch input.

Otherwise, when it is determined at step 1231 that the touch gesture does not correspond to the pickup cancel input, the device executes the input command corresponding to the touch gesture (1233). For instance, the device can wait for the first and second type multi-touch inputs of terminate a previously executed operation in response to the input command. In case of terminating the previously executed operation, the picked-up objects can be recovered.

The pickup and release commands recognition procedure in the object handling method according to an exemplary embodiment of the present invention is described hereinafter.

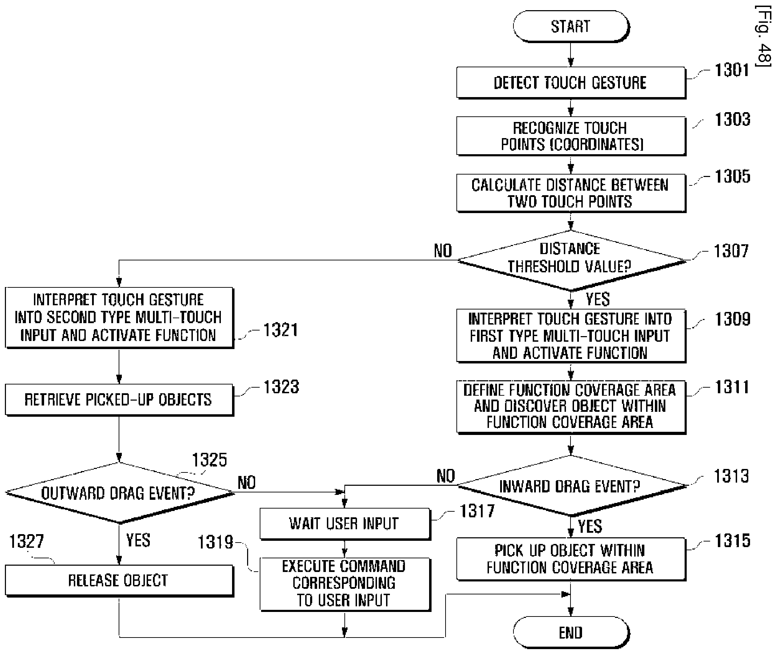

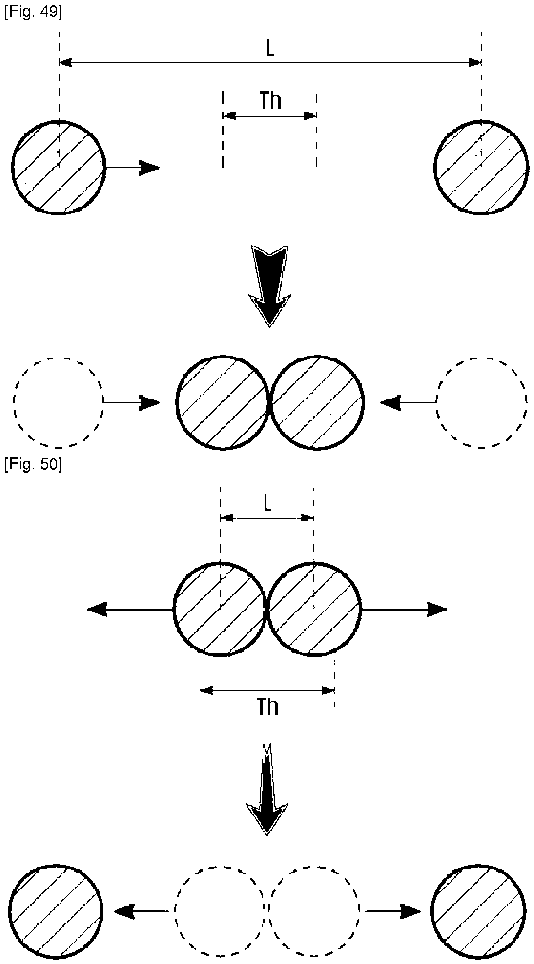

FIG. 48 is a flowchart illustrating a touch gesture interpretation procedure of the object handling method according to an exemplary embodiment of the present invention, and FIGs. 49 and 50 are conceptual diagrams illustrating how to interpret a touch gesture into a pickup command in the object handling method according to an exemplary embodiment of the present invention.

Referring now to FIGs. 48 and 49 and 50, the device first detects a touch event (1301) and recognizes touch points (coordinates) made by the touch event (1303). Here, it is assumed that the touch event is made with two touch points as shown in FIGs. 49 and 50. Once the two touch points are recognized, the device calculates the distance "L" between the two touch points (1305). The distance L can be calculated using the coordinates of the two touch points.

Next, the device compares the distance L with a predetermined threshold value "Th" to determine whether the distance L is equal to or greater than the threshold value Th (1307). According to the comparison result, the type of the touch gesture can be determined.

If the distance L between the two touch points is equal to or greater than the threshold value as shown in FIG. 49, the device recognizes the initiation of a first type multi-touch input and activates a function related to the first type multi-touch input, i.e. a pickup function (1309). Once the pickup function is activated, the device defines a pickup function coverage area and discovers objects within the pickup function coverage area (1311). A description of how to define the pickup function coverage area and detect the object inside the pickup function coverage area is described hereinafter. In an exemplary embodiment of the present invention, step 1311 is optional and thus can be omitted depending on the implementation.

Next, the device tracks movements of the two touch points to detect an inward drag event (i.e. an event in which the two touch points are dragged to approach with each other as shown in FIG. 49) (1313). If an inward drag event is detected, the device recognizes a pickup gesture (a combination of the touch event and the inward drag event) and thus picks up the object within the pickup function coverage area (1315). In case that an outward drag event (i.e. the event in which the two touch points are dragged away from each other) is detected after the pickup function related to the first type multi-touch input is activated, the device can process the outward drag event as an input error.

If no drag event is detected at step 1313, the device waits until a user input is detected (1317) and, if a user input is detected, performs an operation corresponding to the user input (1319). The user input can be a cancel command for canceling a first type multi-touch input.

In an exemplary embodiment of the present invention, the first multi-touch input is generated by a touch gesture which is a combination of a multi-touch event made with two touch points, an inward drag event made by dragging the two touch points to approach with each other, and a lift event made by releasing the two touch points from the screen.

Returning now to step 1307, if the distance L between the two touch points is less than the threshold value, the device recognizes the initiation of a second type multi-touch input and activates a function related to the second type multi-touch input, i.e. a release function (1321) and retrieves the object, which has been picked up previously in response to the first type multi-touch input, from a call stack (1323).

Next, tracked movements of the two touch points to detect an outward drag event (i.e. an event in which the two touch points are dragged away from each other as shown if FIG. 50) (1325).

If an outward drag event is detected, the device recognizes a release gesture (a combination of the touch event and the outward drag event) and thus releases the object retrieved from the call stack at a position whether the release gesture is detected (1327). In case that an inward drag event is detected after the release function related to the second type multi-touch input is detected, the device can process the inward drag event as an input error.

If no drag event is detected at step 1325, the device waits until a user input is detected (1317) and, if a user input is detected, performs an operation corresponding to the user input (1319). The user input can be a cancel command for canceling a first type multi-touch input or a new first type multi-touch input for pickup of another object.

In another exemplary embodiment of the present invention, the second multi-touch input is generated by a touch gesture which is a combination of a multi-touch event made with two touch points, an outward drag event made by dragging the two touch points away from each other, and a lift event made by releasing the two touch points from the screen.

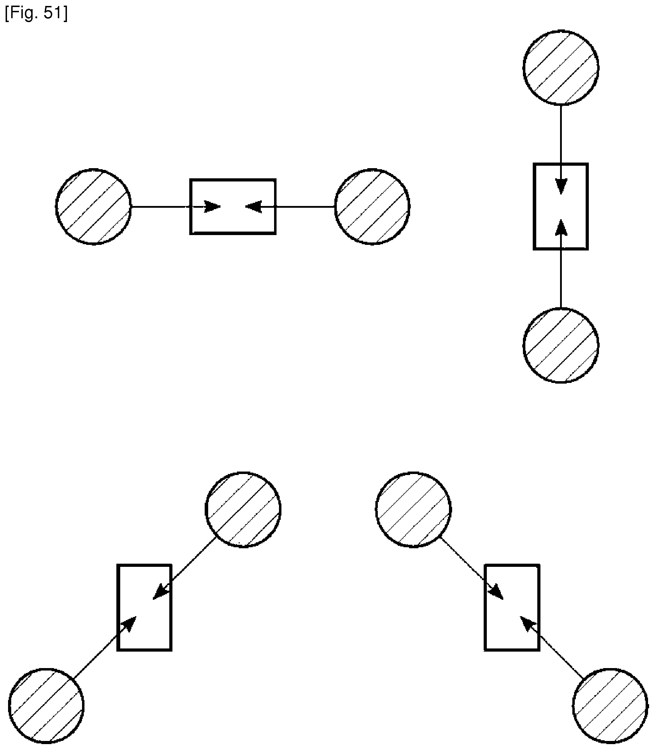

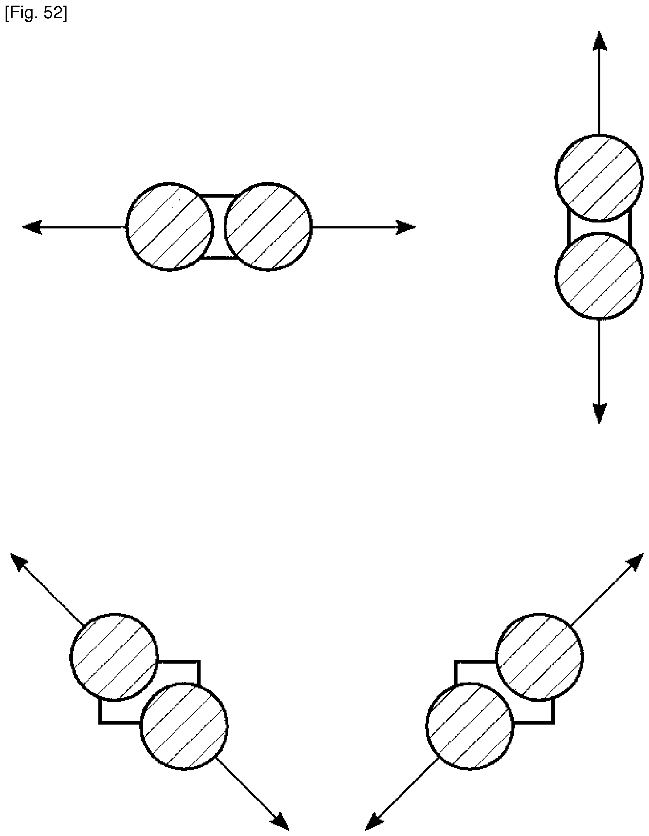

FIGs. 51 and 52 are conceptual diagrams illustrating how to form the pickup and release gestures for generating the first and second type multi-touch input in an object handling method according to an exemplary embodiment of the present invention.

FIG. 51 shows valid pickup gestures that can be interpreted into the first type multi-touch input. The pickup gesture for generating the first type multi-touch input is initiated with a multi-touch event. The multi-touch event can be made by touching two points on an imaginary straight line crossing the target object on the touchscreen. The imaginary straight line can be a vertical line, a horizontal line, or a diagonal line from the viewpoint of the surface of the screen. The target object is selected, for example, by an inward drag event following the multi-touch event. The inward drag event can be formed by moving the two touch points to approach with each other. While the inward drag event occurs, the target object is selected with a visual effect as if a physical object is picked up by fingers.

FIG. 52 shows valid release gestures that can be interpreted into the second type multi-touch input. The release gesture for generating the second type multi-touch input is initiated with a multi-touch event. The multi-touch event can be made by touching two points which forms an imaginary straight line on the touchscreen. The imaginary straight line can be a vertical line, a horizontal line, or a diagonal line from the viewpoint of the surface of the screen. The called object is released by an outward drag event following the multi-touch event. The outward drag event can be formed by moving the two touch points away from each other. While the outward drag event occurs, the called object is placed on the imaginary straight line between the two touch points with a visual effect as if a physical object is released by fingers.

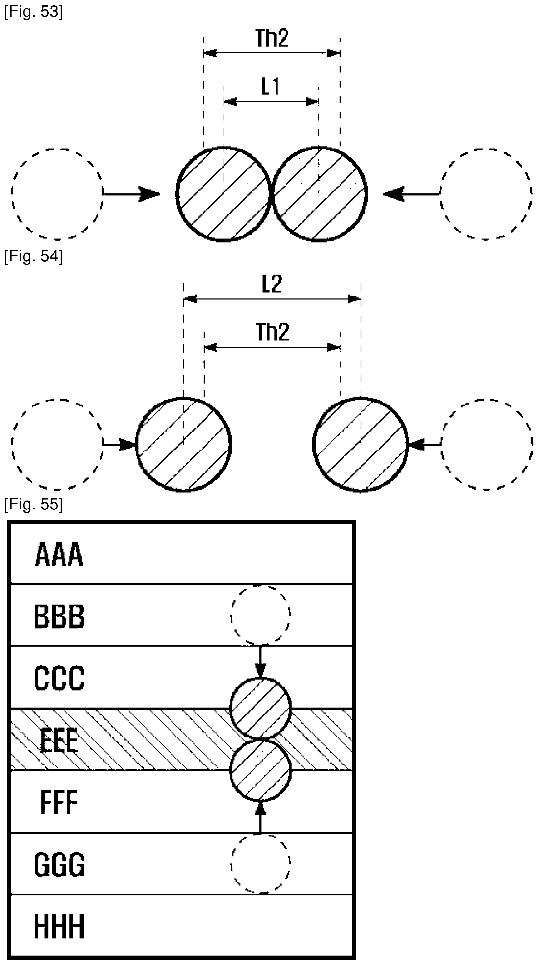

FIGs. 53 and 54 are conceptual diagrams illustrating an exemplary object selection operation using a pickup gesture introduced for the object handling method according to an exemplary embodiment of the present invention, and FIGs. 55 to 57 are conceptual diagrams illustrating another exemplary object selection operation using a pickup gesture introduced for the object handling method according to an exemplary embodiment of the present invention.

The pickup gesture can be made for selecting one or more objects distributed on the screen by adjusting the distance between the two touch points. This function can be useful when the user does a slightly complex task using the device. For instance, when using an e-book application, the pickup gesture can be applied to flip one or more pages of an e-book by adjusting the distance between two touch points.

As shown in FIG. 53, when the inward drag is detected, the device compares the distance L1 between the two touch points after the inward drag event has completed and a predetermined threshold value Th2. If the distance L1 is less than the threshold value Th2, the device controls such that a single object placed between the two touch points is selected.

As now shown in FIG. 54, when the inward drag is detected, the device compares the distance L2 between the two touch points after the inward drag event has completed and the predetermined threshold value Th2. In this example, if the distance L2 is equal to or greater than the threshold value Th2, the device controls such that multiple objects placed between the two touch points are selected.

FIGs. 55 to 57 show how to select a different number of objects using the pickup gesture with an exemplary menu list of multiple items (objects).

In an exemplary case shown in FIG. 55, a touch event occurs with two touch points and then an inward drag event occurs by dragging the two touch points to approach with each other. The device detects the inward drag event following the touch event and compares the distance L1 between the two touch points after the completion of the inward drag event with the second threshold value Th2. If the distance L1 is less than the threshold value Th2, the device controls such that the object EED placed between the two touch points.

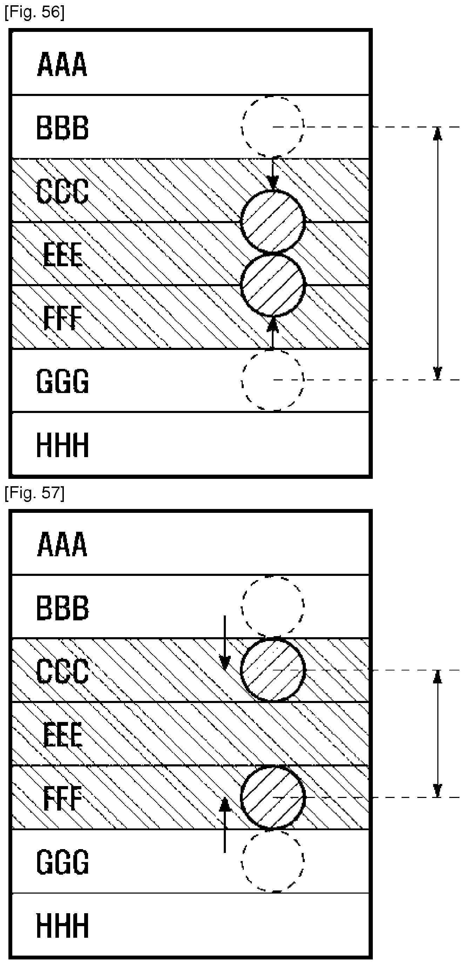

In another exemplary case shown in FIG. 56, the device recognizes the two touch points made by the touch event and selects the objects CCC, EEE, and FFF placed between the two touch points at the same time regardless of the inward drag event following the touch event.

In an exemplary case shown FIG. 57, a touch event occurs with two touch points and then an inward drag event occurs by dragging the two touch points to approach with each other. The device detects the inward drag event following the touch event and compares the distance L2 between the two touch points after the completion of the inward drag event with the second threshold value Th2. If the distance L2 is equal to or greater than the threshold value Th2, the device controls such that the objects CCC, EEE, and FFF placed between the two touch points.

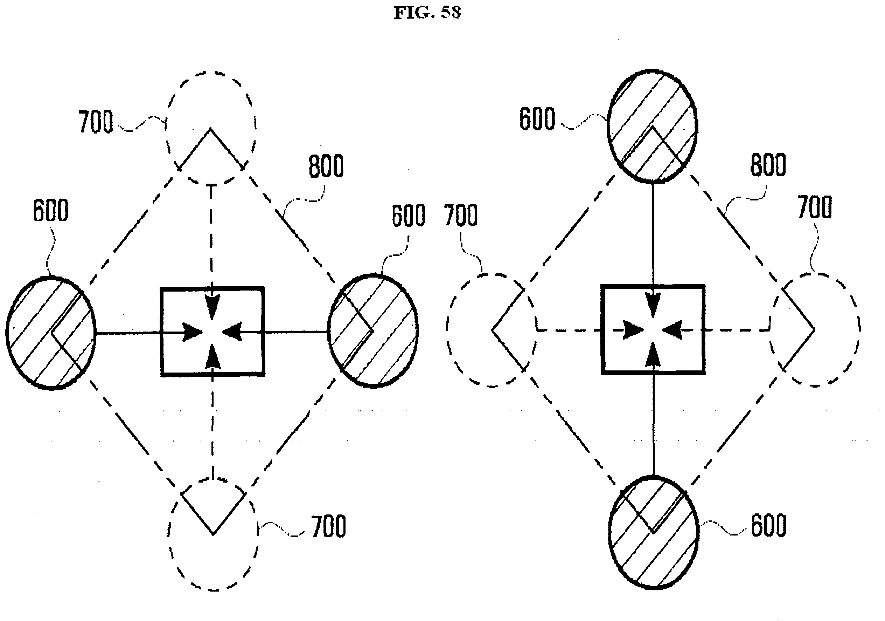

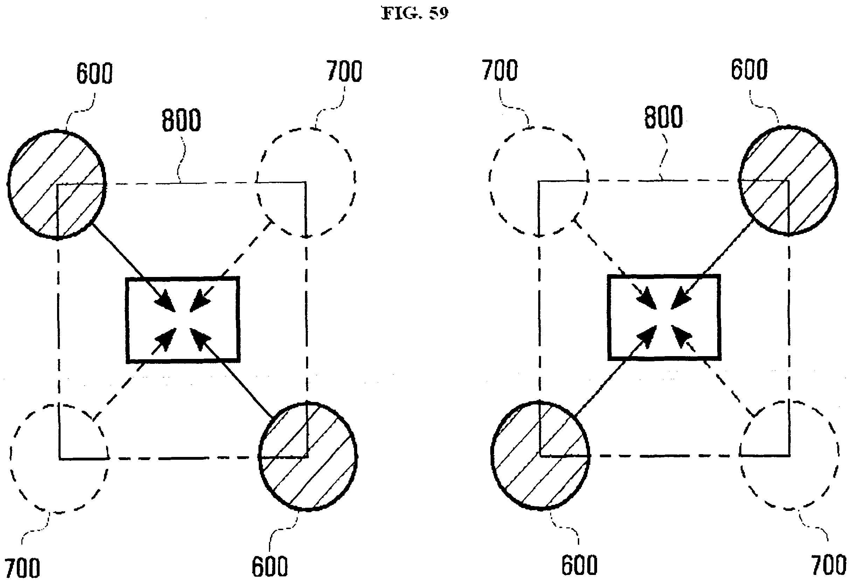

FIGs. 58 to 60 are conceptual diagrams illustrating how to determine an object as the target object of a first type multi-touch input according to an exemplary embodiment of the present invention. Here, it is assumed that the first type multi-touch input is generated by a multi-touch event occurred with two touch points.

Referring now to FIGs. 58 to 60, if a multi-touch event with two initial touch points occurs and then an inward drag event occurs with two dragged touch points 600, the device recognizes the two dragged touch points 600 and creates two imaginary points 700 at of 90 degree angles.

Next, the device draws an imaginary line connecting the dragged touch points 600 and the imaginary points 700 so as to define a pickup coverage area 800. Next, the device searches the pickup coverage area for objects and selects the objects search in the pickup coverage area.

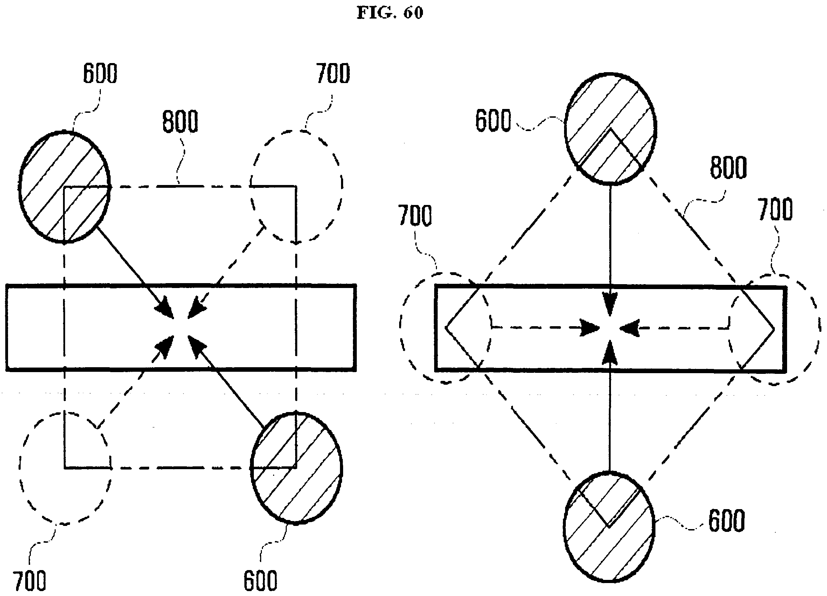

FIG. 60 shows an exemplary case in which an object that is located in the middle of the pickup coverage area 800 but out of the range of the pickup coverage area 800 defined by the imaginary line connecting the dragged touch points 600 and the imaginary points 700. In an exemplary embodiment of the present invention, the device can recognize the object located inside the pickup coverage area 800 and the object located across the imaginary line of the pickup coverage area 800.

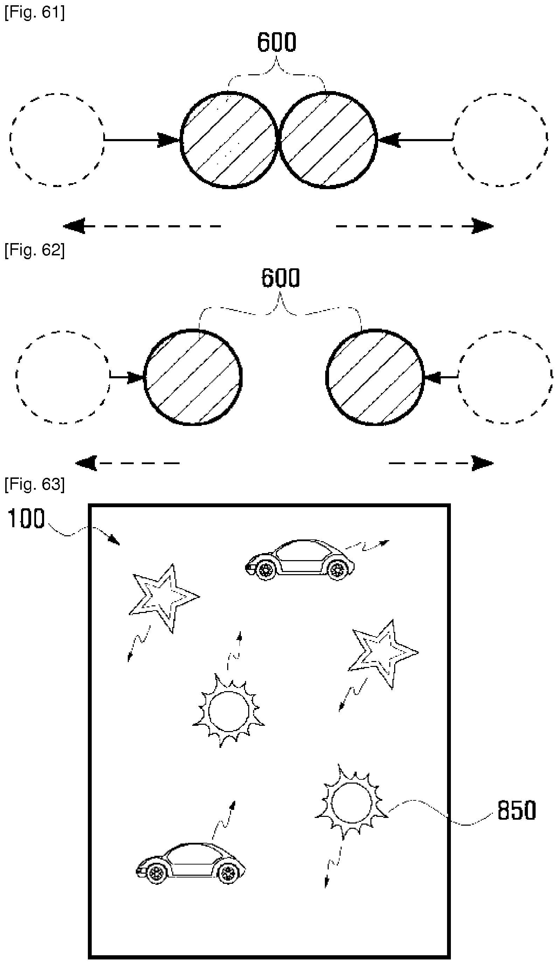

FIGs. 61 and 62 are conceptual diagrams illustrating operations for canceling the pickup command after an object is selected by the pickup gesture in the object handling method according to an exemplary embodiment of the present invention.

Referring now to FIGs. 61 and 62, the device detects a pickup gesture composed of a touch event occurred with two touch points (initial touch points) and an inward drag event occurred by dragging the two touch points to approach with each other. As a result of the inward drag event, the distance between the two touch points (dragged touch points 600) are narrowed. Once the pickup gesture is detected, the device interprets the pickup gesture into the first multi-touch input for selecting the object targeted by the pickup gesture and thus selects the target object with a pickup effect.

If an outward drag event (i.e. if the touch points 600 are dragged away from each other) is detected after the target object is selected by the pickup gesture, the device interprets the outward drag event into a selection cancel input. That is, if an outward drag event occurs right after the inward drag event for selecting the target object, the device determines that the first multi-touch input for selecting the target object has been canceled.

If a release event occurs (i.e. if the two touch points are released from the touchscreen) after the outward drag event, the device cancels the selection of the target object with a selection cancel effect. For instance, when the release event occurs, the device cancels the selection of the target object with a vibration feedback for indicating the cancelation of the selection. Also, the selection cancel effect can include a visual effect in which the selection canceled object is recovered to appear at the position as it was originally shown.

The operations performed in response to the first and second multi-touch inputs and the object handling method that is achieved with those operations are described hereinabove. How the first and second type multi-touch inputs can be applied to the applications running in the device is described with reference to accompanying drawings.

FIGs. 63 to 65 are diagrams illustrating exemplary screen images used to illustrate how the first multi-touch input is applied to a game application according to an exemplary embodiment of the present invention.

Referring now to FIGs. 63 to 65, the device first executes a game with a game execution screen 100 in response to the user request as shown in FIG. 63. The game execution screen includes a plurality of game items, i.e. objects, distributed thereon according to the progress stage of the game. Although not shown in FIGs. 63 to 65, a game-dedicated user interface can be displayed on the game execution screen 100. For instance, the game execution screen can be provided with a user interface providing game-related information including game progress time, game score, player's rank, etc.

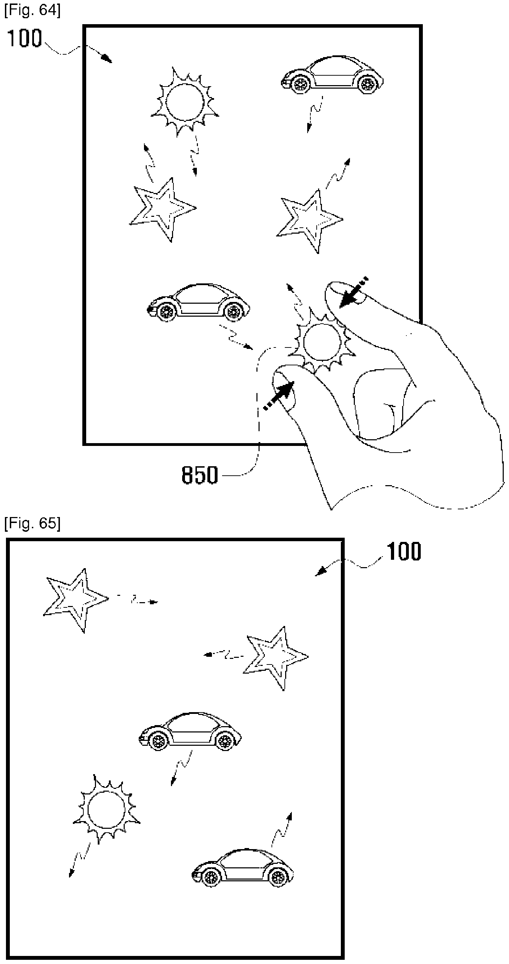

While the game execution screen is displayed, the user can perform a pickup gesture for selecting one of the objects distributed on the game execution screen. If a pickup gesture is detected on the game execution screen by means of the touchscreen, the device interprets the pickup gesture into the first type multi-touch input for selecting the object 850 placed at a position whether the pickup gesture is detected. That is, if the user performs the pickup gesture to the object 850 displayed in the game execution screen 100 as shown in FIG. 64, the device interprets the pickup gesture into the first type multi-touch input and thus selects the object 850 with a predetermined pickup effect.

After selecting the object 850 with the pickup effect, the device controls the object 850 to disappear from the game execution screen 100, the resultant screen being shown in FIG. 65.

In case that the game is a mission to remove dynamically moving objects in a given time, a timer for counting the given time can be provided on the game execution screen 100. Also, the pickup status indication item 300 described with reference to FIG. 7 can be provided on the game execution screen 100. In this case, the pickup status indication item 300 can be configured to show that the objects picked up to achieve the mission goal are stacked. The object pickup status can be updated whenever an object is selected in response to the first type multi-touch input generated by the pickup gesture in real time. Also, a score indicator for showing the score achieved by successfully picking up the objects can be provided at a position on the game execution screen 100.

If the timer expires, the device can close the game execution screen 100 and display a statistic screen providing the user with the information on the game result information including scores, rankings, and the like. As described above, the user can select the game proposing a mission to remove dynamically moving objects on the game execution screen 100 using the first type multi-touch input.

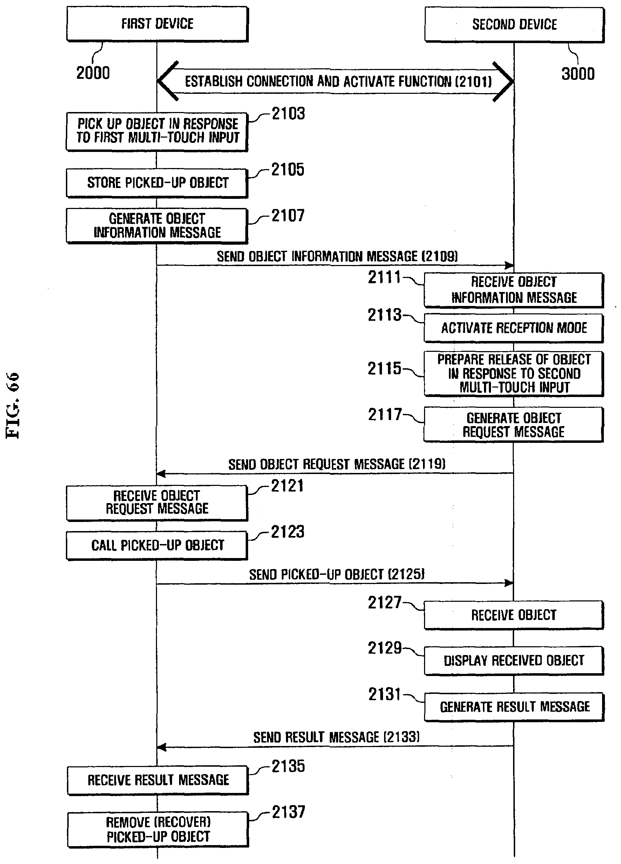

A explanation of how the first and second type multi-touch inputs can be applied to another application will now be described with reference to the accompanying drawings. Particularly in an exemplary application to be described with reference to FIGs. 66 and 67 to 71, an object can be picked up in a first device and released in the second device. Although the object handling method is described with an exemplary situation in which an object is moved from a first device to a second device, the present invention is not limited thereto. For instance, the object handling method can be applied for copying an object stored in the first device to the second device according to a preset configuration or a key input combination.

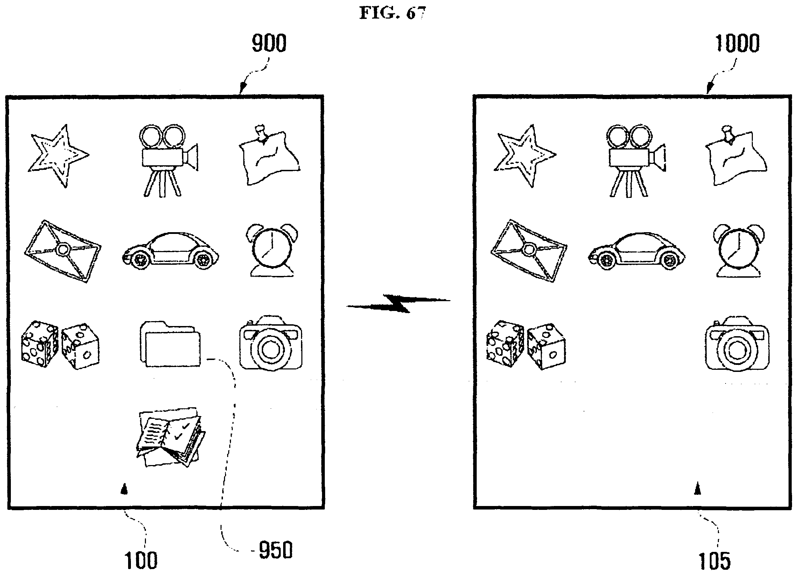

FIG. 66 is a sequence diagram illustrating operations of first and second devices in an object handling method according to an exemplary embodiment of the present invention, and FIGs. 67 to 71 are diagrams illustrating screen images provided to assist in explaining the operations of FIG. 66.

Referring to FIGs. 66 and 67 to 71, the first and second devices 2000 and 3000 establish a communication link according to a predetermined communication protocol and activate functions related to the object handling operations (2101). That is, the first and second devices 2000 and 3000 execute the same application with their respective execution screens 100 and 105 in response to user requests as shown in FIG. 67. In FIG. 67, reference numeral 900 denotes the display of the first device 2000, and reference numeral 1000 denotes the display of the second device 3000. The application execution screens 100 and 105 of the respective first and second devices 2000 and 3000 have a plurality of objects distributed thereon.

In an exemplary embodiment of the present invention, the devices 2000 and 3000 can be connected through a short range wireless communication link such as Bluetooth link or a wired link such as cable. Of course, the connection between the first and second devices 2000 and 3000 can be established by means of one of various wireless or wired communication technologies. In FIGs. 66 and 67 to 71, the object handling method is described under the assumption that the first and second devices 2000 and 3000 are connected through a wireless link.

The wireless link can be established using one of various wireless communication technologies including but in no way limited to Bluetooth, Infrared Data Association (IrDA), Zigbee as just a few examples the technologies that can be used to link the devices.

After the first and second devices 2000 and 3000 are connected through the wireless communication link, if the user of the first device 2000 makes pickup gesture to an object 950 on the touchscreen of the first device 2000, the first device 2000 interprets the pickup gesture into the first type multi-touch input for selecting the object 950 and thus selects the object 950 in response to the first type multi-touch input (2103).

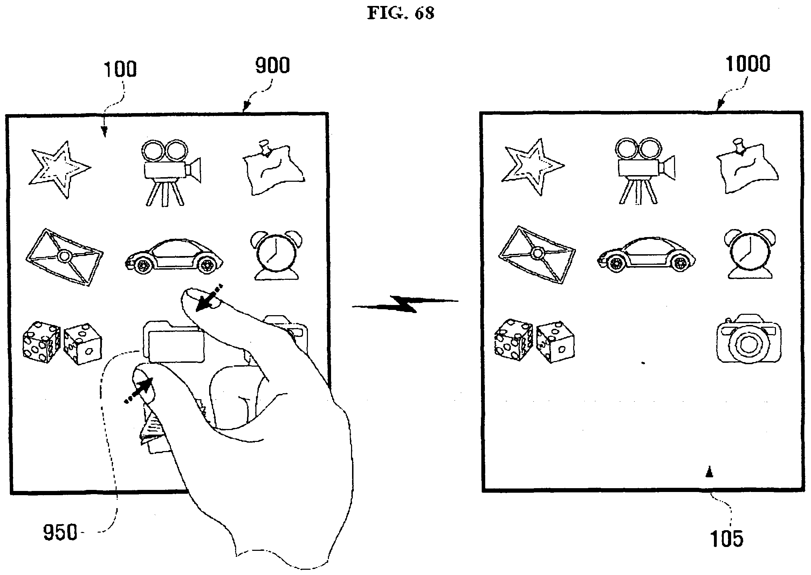

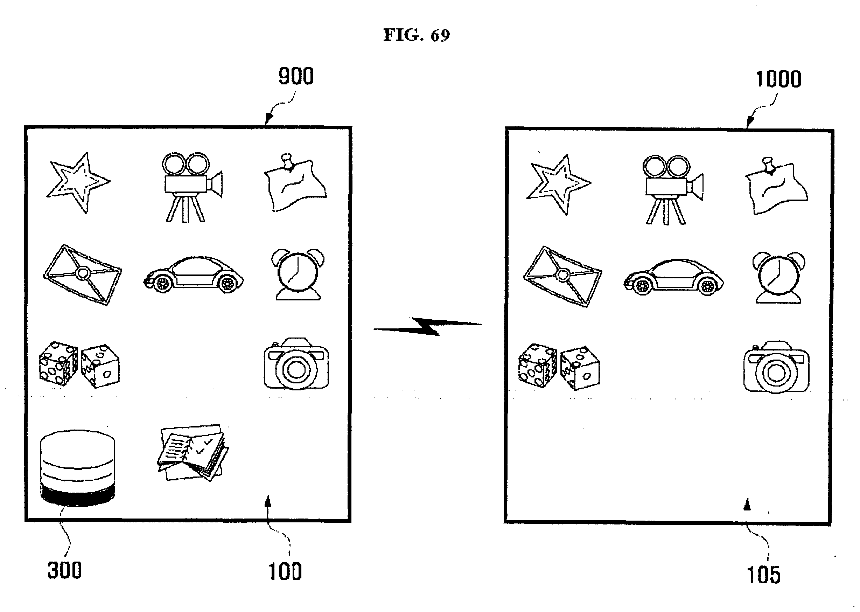

At this time, the object selected in response to the first type multi-touch input disappears from the screen 100 of the first device 2000. Next, the first device 2000 stores the object 950 with a pickup effect in which the object disappears from the application execution screen. Next, the first device 2000 stores the selected object 950 or the macro information for calling the selected object 950 (2107). Steps 2103 and 2105 of FIG. 66 correspond to the operations depicted in FIGs. 68 and 69.

Since the operations of the first device 2000 are substantially identical with those of the exemplary object handling methods described in the previous exemplary embodiments, detailed description on the operations of the first device 2000 are omitted. As shown in FIG. 69, the pickup status indication item 300 described with reference to FIG. 7 can be provided at a position on the application execution screen 100 of the first device 2000 to indicate the pickup status of the object 950.

After storing the selected object 950, the first device 2000 generates an object information message the selected object 950 and sends the object information message to the second device 3000 (2109). The object information message can be a reception mode activation request message instructing the second device 3000 to activate reception mode and prepare for receiving the object 950. That is, the object information message can be a control command for activating the receiver of the second device 3000.

Although not shown in FIG. 66, the first device can check the status of the connection with the second device 3000 before transmitting the object information message.

The second device 3000 receives the object information message transmitted by the first device 2000 (2111). Upon receipt of the object information message, the second device 3000 parses the object information message and activates reception mode (2113). Once the reception mode is activated, the second device 3000 can receive the object 950 picked up at the first device 2000. The second device 3000 can be configured to output an alert when the object information message is received and/or the reception mode is activated.

Once the reception mode is activated at the second device 3000, the user can perform a touch gesture to generate the second type multi-touch input on the application execution screen 105 of the second device 3000. That is, the user can perform a release gesture to release the object 950 picked up at the first device 2000. If the release gesture is detected, the second device 3000 interprets the release gesture into the second type multi-touch input and prepares for releasing the object 950 at a position where the release gesture is detected (2115).

If the second type multi-touch input is detected at the second device 3000, the second device 3000 generates an object request message (2117) and sends the object request message to the first device 2000 (2119). The object request message can be a message requesting the first device 2000 to transmit the object 950 that is picked up and stored in the first device 2000 in response to the first type multi-touch input. That is, the object request message can carry the control command requesting the first device 2000 to transmit the picked-up object.

The first device 2000 receives the object request message transmitted by the second device 3000 (2121). Upon receipt of the object request message, the first device 2000 parses the object request message and calls the object 950 picked up and stored previously (2123). Next, the first device 2000 transmits the called object 950 to the second device 3000 (2125).

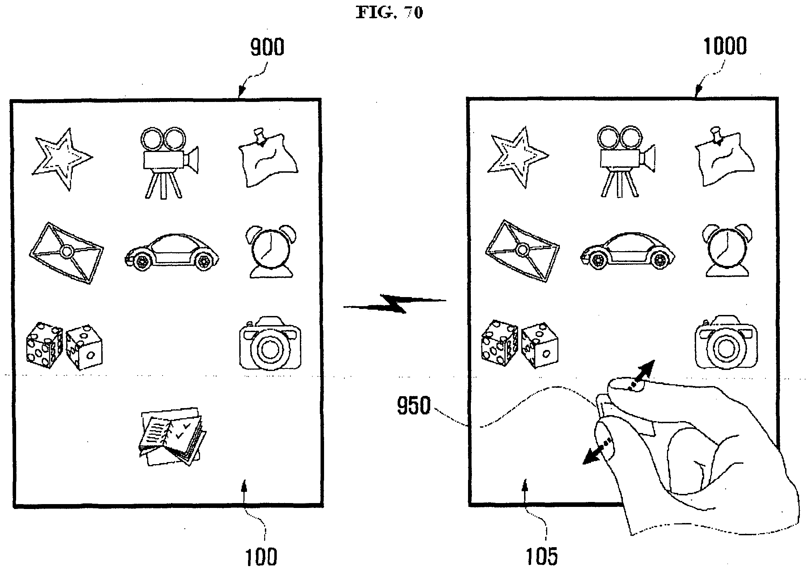

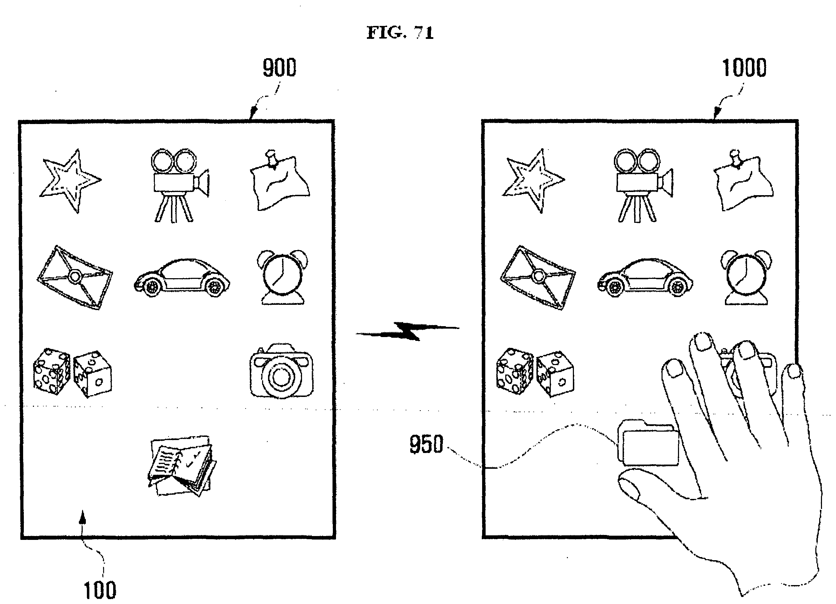

The second device 3000 receives the object 950 transmitted by the first device 2000 (2127) and displays the object 950 at the position where the release gesture is detected on the application execution screen 105 (2129). At this time, the second device 3000 can release the object 950 with a visual effect as described above. It is also within the scope of the claimed invention that an object copied to the second device could have a slightly different appearance to indicate it was a copied item, and/or have a distinguishable visual effect from mere movement within areas of the same device. Further, the first device may provide some indication that an item has been moved and provides an identity of such device, particularly in the even there are more than two devices wireless linked and capable of the aforementioned functionality. FIGs. 70 and 71 show exemplary actions taken on the application execution screen 105 of the second device 3000 in accordance with steps 2115 to 2129 of FIG. 66. The actions depicted in FIGs. 70 and 71 are performed in the same manner as described in the previous exemplary embodiments, detailed description is omitted.

After displaying the object 950 at the position where the release gesture is detected on the application execution screen 105, the second device 3000 generates a result message (2131) and sends the result message to the first device 2000 (2133). The result message can include the information on the object release result, i.e. whether the object 950 is successfully released or failed.

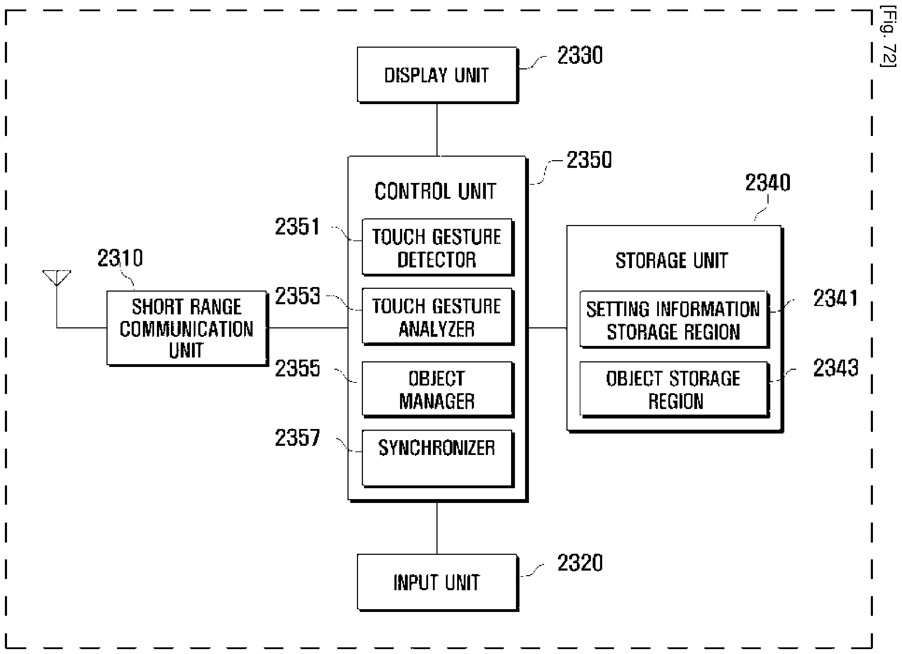

Still referring to FIG. 72, the first device 2000 receives the result message transmitted by the second device 3000 (2135). Upon receipt of the result message, the first device parses the result message and deletes the object 950 picked up and stored in the storage mean from the first device 2000 (2137). Although the object 950 is moved from the first device 2000 to the second device 3000 in "transfer mode" such that successfully transmitted object 950 is deleted from the first device 200 in the exemplary embodiment of FIG. 66, the present invention is not limited thereto. For instance, the object 950 can be copied from the first device 2000 and pasted to the second devices 3000 in "copy mode" without removal of the object 950 from the first device 2000, whereby the picked-up object 950 is recovered at it original position upon receipt of the result message.

As described with reference to FIGs. 66 and 67 to 71, the object 950 is picked up at the first device 2000 using the pickup gesture and then released at the second device 3000 using the release gesture. In this manner, the objects can be transferred and copied among the devices, resulting in an advantageous improvement of object handling.

Until now, the object handling methods and operations using multitouch gestures according to the exemplary embodiments of the present invention were described. The structure and functions of the device to implement the above described object handling methods and operations are described hereinafter. The present invention is not limited to the features of the device described hereinafter, but the person or ordinary skill in the art understands any appreciates that various changes and modifications can be made to the described exemplary embodiments that fall within the scope of the claimed invention.

In an exemplary embodiment of the present invention, the device can be any of a variety of electronic devices including Personal Digital Assistant (PDA), Portable Multimedia Player (PMP), MP3 player, digital broadcast player, laptop computer, desktop computer, mobile communication terminal, and their equivalent devices that have a touchscreen supporting touch input.

However, the present invention is not limited to the usage of the device, can be applied to all types of display device including, a display unit in accordance with the below exemplary embodiments of the present invention. In other words, the present invention includes all types of display device including a display unit that provides an output corresponding to an input of user, and such display devices can include medium to large display devices including TV, Large Format Display (LFD), Digital Signage (DS) and media pole, as well as a small display devices such as the device. In addition, the display unit using a touchscreen is described as typical example. However, the display unit of the present invention is not limited to the touchscreen, but can include all types of display unit that provides an output in response to user's input.

The structure of a device according to an exemplary embodiment of the present invention is now described with reference to FIG. 72.

FIG. 72 is a block diagram illustrating a configuration of a device according to an exemplary embodiment of the present invention.

Referring now to FIG. 72, the device according to an exemplary embodiment of the present invention includes a short range communication unit 2310, an input unit 2320, a display unit 2330, a storage unit 2340, and a control unit 2350.

The short range communication unit 2310 is responsible for short range radio communication of the device. The short range communication unit 2310 establishes a radio channel with another device by means of a radio technology for transmitting and receiving data. the short range communication unit 2310 can be implemented with at least one of a Bluetooth module, an IrDA module, or a Zigbee module, just to name a few possible transmission protocols that could be used with the present invention, and it is within the scope of the claimed invention that other wireless technology-enabled communication module can be used. In an exemplary embodiment of the present invention, the short range communication unit 2310 is implemented with a Bluetooth module.

The short range communication unit 2310 can be implemented with an antenna (e.g. Bluetooth antenna) for Bluetooth communication using the Bluetooth protocol. The device can establish a communication link with another device by via the short range communication unit 2310. In an exemplary embodiment of the present invention, the device can transmit an object to another device through the radio communication link.

The input unit 2320 is configured to receive alphanumeric data inputs and various control inputs for setting and controlling various functions of the device and transfers the inputs to the control unit 2350. Particularly in an exemplary embodiment of the present invention, the input unit 2320 can be implemented with a touchpad as a primary input apparatus or an auxiliary input apparatus. The input unit 2320 can be implemented with at least one of touchpad, touchscreen, normal keypad, qwerty keypad, and supplementary function keys. In case that the device is implemented only with the touchscreen, the touchscreen can replace the input unit 2320.

The display unit 2330 displays execution screens of the applications running in the device, operation status, feedbacks of actions such as input event and key manipulation, and function setting information. The display unit 2330 displays the signals and color information output from the control unit with visual effect. The display unit 2330 can be implemented with a Liquid Crystal Display (LCD). In this case, the display unit 2330 can include an LCD controller, a video memory, and LCD devices. However, virtually any thin screen technology having touch capability may also be used for the display, as the invention is not limited to LCD.

The display unit 2330 can be implemented with a touchscreen according to an exemplary embodiment of the present invention. The touchscreen is a display having a touch sensitive surface that can detect touch events including single touch, multi-touch, drag, tap, flick, and so forth. If a touch event is detected at a position where an object is placed or a predetermined position on the touchscreen, the touchscreen locates the position such that a software program performs an action in response to the touch event. The touchscreen is a display device working as an input means.

The touchscreen can be implemented by laminating a touch panel in front of the display unit 2330, but the invention is not limited to any particular structure or method of sensing touch. In case of infrared technology based touchscreen, light beams are sent horizontally and vertically over the touch panel to form a grid such that, when the panel is touched, some of the light beams are interrupted to locate the position. If a touch event is made to a data (object including widget, widget icon, widget set icon, video, user interface, and so forth) displayed on the touch screen, the control unit 2350 recognizes the touch input with reference to the position and type of the touch event and executes the command corresponding to the touch input. Accordingly, the user can input a command intuitively.

For instance, if the user makes a touch event at a specific position on the touchscreen, the touchscreen detects the position and sends position information to the control unit 2350. In an exemplary embodiment of the present invention, the control unit 2350 can control such that an object at which the touch event is detected will disappear from view via a predetermined visual effect. The control unit 2350 also can control such a specific object is called in response to a touch event and appears at position where the touch event is detected.

That is, the display unit 2330 receives a control signal by means of the touchscreen and sends the control signal to the control unit. The operations of the touchscreen-enabled display unit 2330 correspond to those described with reference to FIGs. 1 to 71.

The storage unit 2340 can be implemented with at least one of various kinds of memory, such as Read Only Memory (ROM) and Random Access Memory (RAM). The storage unit 2340 stores various kinds of data created and used in the device. The data include application data generated when applications are running in the device and received from other device and user data input by the user. Particularly in an exemplary embodiment of the present invention, the data include the objects such as widgets, widget icons, application icons, menu items, menu lists, images, and background images. The data also include user interface provided by the device and various function setting parameters.

Particularly in an exemplary embodiment of the present invention, the storage unit 2340 preferably stores the setting information related to the multi-touch input and various touch gestures. The setting information includes touch gesture information, effect information, supplementary function information, and so forth. Such setting information is stored in a setting information storage region 2341 of the storage unit 2340. The storage unit 2340 also includes an object storage region 2343 for storing the objects picked up in response to a multi-touch input. The object storage region 2343 stores the objects picked up in response to the first type multi-touch input described with reference to FIG. 6.

The storage unit 2340 also stores applications related to the general operations of the device and applications related to the operations performed in response to the multi-touch inputs according to an exemplary embodiment of the present invention. These applications can be the applications executing the operations described with reference to FIGs. 1 to 71. These applications can also be stored in an application storage region (now shown) of the storage unit 2340.

The storage unit 2340 also can include at least one buffer for buffering the data generated while the aforementioned applications are running. The storage unit 2340 can include at least one of internal storage media and external storage media including smartcard.

The control unit 2350 preferably controls entire operations of the device and signaling among the internal functions blocks. The control unit 2350 also controls signaling among the short range communication unit 2310, the input unit 2320, the display unit 2330, and the storage unit 2340.

In case where the device comprises a mobile communication terminal, the control unit 2350 can include a data processing unit having a codec and at least one modem for providing wireless communication function. When the device supports mobile communication function, the device can further include a Radio Frequency (RF) unit for processing radio signals.

Particularly in an exemplary embodiment of the present invention, the control unit 2350 can control the operations related to the detection of touch gestures detected by the touchscreen and handling the objects displayed on the screen according to the types of touch gestures. It should be understood that with regard to touch gestures, the claimed invention is also applicable to screens that do not require actual physical contact with the screen, but merely require the fingers (or pointers) come close enough to the surface of the screen to be detected. In particular, for example, advance screens using formats including but in no way limited to optical may not need physical contact with the surface to sense a change in light associated with a selection or routine referred to hereinbefore as a "multi-touch" gesture. Thus, the invention includes substantially sufficient proximity to the surface of the screen that can be recognized by the device as falling within the definition of touch gestures and touchscreens according to the claimed invention.

When an object is picked up or released in response to a multi-touch input corresponding to the touch gesture, the control unit 2350 controls such that the object disappear or appear with the a predetermined effect. The control unit 2350 also controls establishment of a connection to another device via a wired or wireless channel and copying or transferring an object to another device according to multi-touch input generated by user's touch gesture.

The control unit 2350 can control the operations described with reference to FIGs. 1 to 71. The operation controls of the control unit 2350 can be implemented with the software functions. The structure and functions of the control unit 2350 are described hereinafter.

The control unit 2350 preferably includes a touch gesture detector 2351, a touch gesture analyzer 2353, an object manager 2355, and a synchronizer 2357.

The touch gesture detector 2351 detects a touch gesture formed on the touchscreen of the display unit 2330. The touch gesture detector 2351 can discriminate between single touch gestures and multi-touch gestures. When a touch gesture is detected, the touch gesture detector 2351 outputs touch gesture information to the touch gesture analyzer 2353.

The touch gesture analyzer 2353 analyzes the touch gesture information received from the touch gesture detector 2352 and determines the type of the touch. That is, the touch gesture analyzer 2353 determines whether the touch gesture is a single touch gesture or a multi-touch gesture. When the multi-touch gesture is recognized, the touch gesture analyzer 2353 determines whether the multi-touch gesture is a first type multi-touch input or a second type multi-touch input. The type of the multi-touch gesture can be determined based on the initial touch event the drag event following the initial touch event. That is, the touch gesture analyzer 2353 compares the distance L between the two touch points of a touch event of the multi-touch gesture and a predetermined threshold value Th and then checks the direction of the drag event following the touch event. If the distance L is equal to or greater than the threshold Th, and the drag event is an inward drag event in which the two touch points are dragged to approach with each other, the touch gesture analyzer 2353 determines the multi-touch gesture is a pickup gesture and interprets the pickup gesture into the first type multi-touch input. Otherwise, if the distance L is less than the threshold Th, and the drag event is an outward drag event in which the two touch points are dragged away from each other, the touch gesture analyzer 2353 determines that the multi-touch gesture is a release gesture and interprets the release gesture into the second type multi-touch input. The multi-touch gesture discrimination procedure is has been described in more detail with reference to FIGs. 48 and 49 and 50.

The object manager 2355 performs pickup or release operations to the object according to the type of the multi-touch input determined by the touch gesture analyzer 2353. When a first type multi-touch input is generated by the pickup gesture, the object manager 2355 performs a pickup action to a target object with an effect. That is, the object manager 2355 controls such that the object placed at the position where the pickup gesture is detected is selected while disappearing from the screen. The object manager 2355 stores the selected object as a picked-up object. When a second type multi-touch input is generated by the release gesture, the object manager 2355 preferably performs a release action to the object picked up in response to the first type multi-touch input with an effect. That is, the object manager 2355 controls such that the object picked-up in response to the first type multi-touch input is called to be released at the position where the release gesture is detected. The object manager 2355 also deletes the object picked up and stored when the release gesture is detected on a recycling bin item provided at a position on the screen. When an object is received from counterpart device via a wired or a wireless communication channel in response to the second type multi-touch input, the object manager 2355 preferably controls such that the object received from counterpart device is released at the position where the release gesture is detected. The operations of the object manager correspond to those described with reference to FIGs. 1 to 71.

The synchronizer 2357 controls establishing a connection with a counterpart device via a wired or a wireless communication channel. After establishing the connection with the other device, the synchronizer 2357 communicates messages with the counterpart device according to the multi-touch inputs.

That is, the synchronizer 2357 establishes a connection with a counterpart device and transmits an object information message in response to the first multi-touch input generated by the pickup gesture. If a picked-up object request message is received in response to the object information message, the synchronizer 2357 sends the picked-up object to the counterpart device. Also, if a result message is received after transmitting the picked-up object, the synchronizer 2357 delivers the result message to the object manager 2355. If the result message is received, the object manager 2355 deletes or recovers the picked-up object based on the information contained in the result message.

In the case where the device receives an object information message in reception mode, the synchronizer 2357 sends the counterpart device a object request message generated in response to the second type multi-touch input and receives the object transmitted by the counterpart device. After the received object is released at the target position on the screen, the synchronizer 2357 sends a result message to the counterpart device.

The operations of the synchronizer 2357 are described with reference to FIGs. 66 and 67 to 71.

Although the device is depicted only with the internal function blocks related to the object handling method of the present invention, the device can further include other function blocks, and the components could be integrated or further separated.

For example, the device can include at least one of a digital broadcast reception unit, an Internet access unit, a camera unit, an audio processing unit, a cable connection unit (wire connection interface), and their equivalents. In case that the device supports the mobile communication function, the device can further include an RF unit and a data processing unit. The data processing unit can include a codec and a modem. Also, each of the internal function blocks of the device can be removed or replaced with an equivalent function block according to the implementation design.

## Claims

1. An object management method for a touchscreen-enabled device, comprising:
receiving (103, 1203) a first multi-touch input to select one or more objects (200) displayed on a touchscreen;
storing (105, 1207) the selected one or more objects (200) and removing (107, 1211) the selected one or more objects (200) on the touchscreen;
receiving (109, 1213) a second multi-touch input to release (111, 1221, 1225) the selected one or more objects (200) on the touchscreen; and
displaying (113) the selected one or more objects (200) at a position where the second multi-touch input is received on the touchscreen,
wherein storing (105, 1207) and removing (107, 1211) a display of the selected one or more objects (200) comprises:
picking up a plurality of objects one after another in response to the first multi-touch input;
storing the plurality of objects (200) in a picked up order; and
removing the plurality of objects one after another on the touchscreen in the picked up order,
wherein the displaying (113) the selected one or more objects (200) comprises displaying, in response to the second multi-touch input, the plurality of objects one after another on the touchscreen in reverse order of the picked up order, and
wherein the method further comprises:
establishing (2101) a connection with a counterpart device (3000);
transmitting (2109) the plurality of objects (200) to the counterpart device (3000); and
displaying (2129), at the counterpart device (3000), the plurality of objects (200) at a position where the second multi-touch input is received on a touchscreen of the counterpart device (3000).

2. The object management method of claim 1, further comprising:
detecting (1203) a touch gesture on an idle mode screen (100);
gradually disappearing, when the touch gesture is interpreted into the first multi-touch input, the one or more objects (200) in response to a lift-up gesture of the first multi-touch input; and
removing (1211) a display of the one or more objects (200) positioned where the one or more objects (200) are located on the touchscreen,
wherein the object management method further comprises recovering (1237), when the touch gesture is interpreted into input for canceling the first multi-touch input, the removed one or more objects (200).

3. The object management method of claim 2, wherein displaying (113) the stored one or more objects comprises:
detecting a touch gesture at a position on the touchscreen;
calling, when the touch gesture is interpreted into the second multi-touch input, the stored one or more objects (200) in response to the second multi-touch input;
releasing (1221, 1225) the called one or more objects at the position where the second multi-touch input is detected; and
executing one of transferring, deleting, copying, and modifying action with the called one or more objects (200) indicated by the second multi-touch input.

4. The object management method of claim 2, wherein displaying (113) the stored one or more objects (200) comprises releasing the plurality of objects (200) and comprises:
detecting a series of touch gestures on the touchscreen, calling, when the touch gestures are interpreted as the second multi-touch inputs, stored objects (200) including objects (200) being previously picked up, and releasing the called objects (200) at the positions where the touch gestures are detected in a release order.

5. The object management method of claim 1, further comprising:
calculating (1305), when a multi-touch input is detected on the touchscreen, a distance between two touch points made by the multi-touch input;
interpreting (1309), when the distance is equal to or greater than a threshold value, the multi-touch input as an initiation of the first multi-touch input; and
interpreting (1321), when the distance is less than the threshold value, the multi-touch input as initiation of the second multi-touch input.

6. The object management method of claim 5, further comprising determining a number of objects according to variance of the distance between two touch points.

7. A device having a touchscreen, comprising:
a touchscreen (2320, 2330) configured to display one or more objects (200) and sense a first multi-touch input to select one or more objects and a second multi-touch input to release the selected one or more objects (200);
a storage unit (2340) configured to store settings related to the first multi-touch input and the second multi-touch input and store one or more objects (200) selected by the first multi-touch input; and
a control unit (2350) configured to:
detect the first multi-touch input to select one or more objects (200) displayed on the touchscreen (2320, 2330),
store the selected one or more objects (200),
remove the selected one or more objects (200) on the touchscreen,
detect the second multi-touch input on the touchscreen (2320, 2330), and
display the selected one or more objects (200) at a position where the second multi-touch input is detected on the touchscreen (2320, 2330),
wherein the control unit (2350) is configured to store and remove the selected one or more objects (200) by:
picking up a plurality of objects one after another in response to the first multi-touch input;
storing the plurality of objects (200) in a picked up order; and
removing the plurality of objects one after another on the touchscreen in the picked up order,
wherein the control unit (2350) is configured to display, in response to the second multi-touch input, the plurality of objects one after another on the touchscreen in reverse order of the picked up order, and
wherein the control unit (2350) is further configured to:
establish (2101) a connection with a counterpart device (3000);
transmit (2109) the plurality of objects (200) to the counterpart device (3000); and
display (2129), at the counterpart device (3000), the plurality of objects (200) at a position where the second multi-touch input is received on a touchscreen of the counterpart device (3000).

8. The device of claim 7,
wherein the control unit (2350) is further configured to detect a touch gesture on the touchscreen (2320, 2330), gradually disappear, when the touch gesture is interpreted into the first multi-touch input, the one or more objects (200) in response to lift-up gesture of the first multi-touch input, and remove a display of the one or more objects (200) positioned where the one or more objects are located on the touchscreen (2320, 2330),
wherein the control unit (2350) is further configured to recover, when the touch gesture is interpreted into input for canceling the first multi-touch input, the removed one or more objects (200), and
wherein the control unit (2350) is further configured to call, when the touch gesture is interpreted into the second multi-touch input, the stored one or more objects (200) in response to the second multi-touch input, release the called one or more objects (200) at the position where the second multi-touch input is detected, and execute one of transferring, deleting, copying, and modifying action with the called one or more objects (200) indicated by the second multi-touch input.

9. The device of claim 8, wherein the control unit (2350) is configured to call, when the touch gestures are interpreted into the second multi-touch inputs, stored objects (200), and release the called objects (200) at the positions where the touch gestures are detected in release order.

10. The device of claim 8, wherein the control unit (2350) is configured to calculate, when a multi-touch input is detected on the touchscreen (2320, 2330), a distance between two touch points made by the multi-touch input and interpret the multi-touch input as an initiation of the first multi-touch input or the second multi-touch input according to whether the distance is equal to or greater than a threshold value, and determine a number of objects according to variance of the distance between two touch points.

11. The device of claim 8, wherein the control unit (2350) comprises:
a touch gesture detector (2351) configured to detect a touch gesture formed on the touchscreen (2320, 2330) and discriminate between a single touch gesture and a multi-touch gesture;
a touch gesture analyzer (2353) configured to determine whether the touch gesture is a single touch gesture or a multi-touch gesture and determine, when the touch gesture is a multi-touch gesture, whether the touch gesture is the first multi-touch input or the second multi-touch input by comparing a distance between the two touch points of a touch event of the multi-touch gesture and a predetermined threshold value and then check the direction of a drag event following the touch event; and
an object manager (2355) configured to perform pickup or release operations to the object (200) according to the type of the multi-touch input determined by the touch gesture analyzer (2353).

12. The device of claim 11, wherein the control unit (2350) further comprises a synchronizer (2357) configured to support a connection establishment with a counterpart device (3000) via a wired or a wireless communication channel and communication of objects (200) and messages with the counterpart device (3000) according to the multi-touch inputs.

## Patentansprüche

1. Objektverwaltungsverfahren für eine berührungsbildschirmfähige Einheit, aufweisend:
ein Empfangen (103, 1203) einer ersten Multi-Touch-Eingabe zum Auswählen von einem oder mehreren Objekten (200), die auf einem Berührungsbildschirm angezeigt werden;
ein Speichern (105, 1207) des ausgewählten einen oder der ausgewählten mehreren Objekte (200), und ein Entfernen (107, 1211) des ausgewählten einen oder der ausgewählten mehreren Objekte (200) auf dem Berührungsbildschirm;
ein Empfangen (109, 1213) einer zweiten Multi-Touch-Eingabe zum Freigeben (111, 1221, 1225) des ausgewählten einen oder der ausgewählten mehreren Objekte (200) auf dem Berührungsbildschirm; und
ein Anzeigen (113) des ausgewählten einen oder der ausgewählten mehreren Objekte (200) an einer Position, an der die zweite Multi-Touch-Eingabe auf dem Berührungsbildschirm empfangen wird,
wobei das Speichern (105, 1207) und das Entfernen (107, 1211) einer Anzeige des ausgewählten einen oder der ausgewählten mehreren Objekte (200) aufweist:
ein nacheinander Aufnehmen einer Mehrzahl von Objekten in Reaktion auf die erste Multi-Touch-Eingabe;
ein Speichern der Mehrzahl von Objekten (200) in einer Reihenfolge der Aufnahme; und
ein nacheinander Entfernen der Mehrzahl von Objekten auf dem Berührungsbildschirm in der Reihenfolge der Aufnahme,
wobei das Anzeigen (113) des ausgewählten einen oder der ausgewählten mehreren Objekte (200) in Reaktion auf die zweite Multi-Touch-Eingabe ein nacheinander Anzeigen der Mehrzahl von Objekten auf dem Berührungsbildschirm in der umgekehrten Reihenfolge der Ausnahme aufweist, und wobei das Verfahren ferner aufweist:
ein Herstellen (2101) einer Verbindung mit einer Gegenpart-Einheit (3000);
ein Übertragen (2109) der Mehrzahl von Objekten (200) zu der Gegenpart-Einheit (3000); und
ein Anzeigen (2129) der Mehrzahl von Objekten (200) auf der Gegenpart-Einheit (3000) an einer Position, an der die zweite Multi-Touch-Eingabe auf einem Berührungsbildschirm der Gegenpart-Einheit (3000) empfangen wird.

2. Objektverwaltungsverfahren nach Anspruch 1, ferner aufweisend:
ein Erkennen (1203) einer Berührungsgeste auf einem Bildschirm (100) im Bereitschaftsmodus;
ein allmähliches Verschwinden des einen oder der mehreren Objekte (200), wenn die Berührungsgeste als die erste Multi-Touch-Eingabe interpretiert wird, in Reaktion auf eine Anhebegeste der ersten Multi-Touch-Eingabe; und
ein Entfernen (1211) einer Anzeige des einen oder der mehreren Objekte (200), die an der Stelle positioniert sind, an der sich das eine oder die mehreren Objekte (200) auf dem Berührungsbildschirm befinden, wobei das Objektverwaltungsverfahren ferner ein Wiederherstellen (1237) des entfernten einen oder der entfernten mehreren Objekte (200) aufweist, wenn die Berührungsgeste als Eingabe zum Aufheben der ersten Multi-Touch-Eingabe interpretiert wird.

3. Objektverwaltungsverfahren nach Anspruch 2, wobei das Anzeigen (113) des gespeicherten einen oder der gespeicherten mehreren Objekte aufweist:
ein Erkennen einer Berührungsgeste an einer Position auf dem Berührungsbildschirm;
ein Aufrufen, wenn die Berührungsgeste als die zweite Multi-Touch-Eingabe interpretiert wird, des gespeicherten einen oder der gespeicherten mehreren Objekte (200) in Reaktion auf die zweite Multi-Touch-Eingabe;
ein Freigeben (1221, 1225) des aufgerufenen einen oder der aufgerufenen mehreren Objekte an der Position, an der die zweite Multi-Touch-Eingabe erkannt wird, und
ein Ausführen von entweder einer übertragenden, löschenden, kopierenden oder modifizierenden Aktion mit dem aufgerufenen einen oder den aufgerufenen mehreren Objekten (200), die durch die zweite Multi-Touch-Eingabe angegeben werden.

4. Objektverwaltungsverfahren nach Anspruch 2, wobei das Anzeigen (113) des gespeicherten einen oder der gespeicherten mehreren Objekte ein Freigeben der Mehrzahl von Objekten (200) umfasst und aufweist:
ein Erkennen einer Reihe von Berührungsgesten auf dem Berührungsbildschirm, ein Aufrufen, wenn die Berührungsgesten als die zweiten Multi-Touch-Eingaben interpretiert werden, von gespeicherten Objekten (200), einschließlich Objekten (200), die vorher aufgenommen wurden, und ein Freigeben der aufgerufenen Objekte (200) in einer Freigabereihenfolge an den Positionen, an denen die Berührungsgesten erkannt werden.

5. Objektverwaltungsverfahren nach Anspruch 1, ferner aufweisend:
ein Berechnen (1305), wenn eine Multi-Touch-Eingabe auf dem Berührungsbildschirm erkannt wird, eines Abstands zwischen zwei Berührungspunkten, die durch die Multi-Touch-Eingabe erstellt wurden;
ein Interpretieren (1309), wenn der Abstand gleich oder größer als ein Schwellenwert ist, der Multi-Touch-Eingabe als eine Initiierung der ersten Multi-Touch-Eingabe; und
ein Interpretieren (1321), wenn der Abstand kleiner als der Schwellenwert ist, der Multi-Touch-Eingabe als eine Initiierung der zweiten Multi-Touch-Eingabe.

6. Objektverwaltungsverfahren nach Anspruch 5, ferner aufweisend ein Bestimmen einer Anzahl von Objekten gemäß einer Varianz des Abstands zwischen zwei Berührungspunkten.

7. Einheit mit einem Berührungsbildschirm, aufweisend:
einen Berührungsbildschirm (2320, 2330), der konfiguriert ist, um ein oder mehrere Objekte (200) anzuzeigen und eine erste Multi-Touch-Eingabe zum Auswählen von einem oder mehreren Objekten und eine zweite Multi-Touch-Eingabe zum Freigeben des ausgewählten einen oder der ausgewählten mehreren Objekte (200) zu erfassen;
eine Speichereinheit (2340), die konfiguriert ist, um Einstellungen zu speichern, die der ersten Multi-Touch-Eingabe und der zweiten Multi-Touch-Eingabe zugehörig sind, und um ein oder mehrere Objekte (200) zu speichern, die durch die erste Multi-Touch-Eingabe ausgewählt wurden; und
eine Steuereinheit (2350), die konfiguriert ist zu:
einem Erkennen der ersten Multi-Touch-Eingabe zum Auswählen von einem oder mehreren Objekten (200), die auf dem Berührungsbildschirm (2320, 2330) angezeigt werden, einem Speichern des ausgewählten einen oder der ausgewählten mehreren Objekte (200),
einem Entfernen des ausgewählten einen oder der ausgewählten mehreren Objekte (200) auf dem Berührungsbildschirm,
einem Erkennen der zweiten Multi-Touch-Eingabe auf dem Berührungsbildschirm (2320, 2330), und
einem Anzeigen des ausgewählten einen oder der ausgewählten mehreren Objekte (200) an einer Position, an der die zweite Multi-Touch-Eingabe auf dem Berührungsbildschirm (2320, 2330) erkannt wird, wobei die Steuereinheit (2350) konfiguriert ist, um das ausgewählte eine oder die ausgewählten mehreren Objekte (200) zu speichern und zu entfernen durch:
ein nacheinander Aufnehmen einer Mehrzahl von Objekten in Reaktion auf die erste Multi-Touch-Eingabe;
ein Speichern der Mehrzahl von Objekten (200) in einer Reihenfolge der Aufnahme; und
ein nacheinander Entfernen der Mehrzahl von Objekten auf dem Berührungsbildschirm in der Reihenfolge der Aufnahme,
wobei die Steuereinheit (2350) konfiguriert ist, um in Reaktion auf die zweite Multi-Touch-Eingabe die Mehrzahl von Objekten nacheinander in der umgekehrten Reihenfolge der Aufnahme auf dem Berührungsbildschirm anzuzeigen, und
wobei die Steuereinheit (2350) ferner konfiguriert ist zu:
einem Herstellen (2101) einer Verbindung mit einer Gegenpart-Einheit (3000);
einem Übertragen (2109) der Mehrzahl von Objekten (200) zu der Gegenpart-Einheit (3000); und
einem Anzeigen (2129) der Mehrzahl von Objekten (200) auf der Gegenpart-Einheit (3000) an einer Position, an der die zweite Multi-Touch-Eingabe auf einem Berührungsbildschirm der Gegenpart-Einheit (3000) empfangen wird.

8. Einheit nach Anspruch 7,
wobei die Steuereinheit (2350) ferner konfiguriert ist zu einem Erkennen einer Berührungsgeste auf dem Berührungsbildschirm (2320, 2330), einem allmählichen Verschwinden des einen oder der mehreren Objekte (200), wenn die Berührungsgeste als die erste Multi-Touch-Eingabe interpretiert wird, in Reaktion auf eine Anhebegeste der ersten Multi-Touch-Eingabe, und einem Entfernen einer Anzeige des einen oder der mehreren Objekte (200), die an der Stelle positioniert sind, an der sich das eine oder die mehreren Objekte auf dem Berührungsbildschirm (2320, 2330) befinden, wobei die Steuereinheit (2350) ferner konfiguriert ist zu einem Wiederherstellen des entfernten einen oder der entfernten mehreren Objekte (200), wenn die Berührungsgeste als Eingabe zum Aufheben der ersten Multi-Touch-Eingabe interpretiert wird, und wobei die Steuereinheit (2350) ferner konfiguriert ist zu einem Aufrufen, wenn die Berührungsgeste als die zweite Multi-Touch-Eingabe interpretiert wird, des gespeicherten einen oder der gespeicherten mehreren Objekte (200) in Reaktion auf die zweite Multi-Touch-Eingabe, einem Freigeben des aufgerufenen einen oder der aufgerufenen mehreren Objekte (200) an der Position, an der die zweite Multi-Touch-Eingabe erkannt wird, und einem Ausführen von entweder einer übertragenden, löschenden, kopierenden oder modifizierenden Aktion mit dem aufgerufenen einen oder den aufgerufenen mehreren Objekten (200), die durch die zweite Multi-Touch-Eingabe angegeben werden.

9. Einheit nach Anspruch 8, wobei die Steuereinheit (2350) konfiguriert ist zu einem Aufrufen, wenn die Berührungsgesten als die zweiten Multi-Touch-Eingaben interpretiert werden, von gespeicherten Objekten (200) und einem Freigeben der aufgerufenen Objekte (200) in der Freigabereihenfolge an den Positionen, an denen die Berührungsgesten erkannt werden.

10. Einheit nach Anspruch 8, wobei die Steuereinheit (2350) konfiguriert ist zu einem Berechnen, wenn eine Multi-Touch-Eingabe auf dem Berührungsbildschirm (2320, 2330) erkannt wird, eines Abstands zwischen zwei Berührungspunkten, die durch die Multi-Touch-Eingabe erstellt wurden, und einem Interpretieren der Multi-Touch-Eingabe als eine Initiierung der ersten Multi-Touch-Eingabe oder der zweiten Multi-Touch-Eingabe, entsprechend dem, ob der Abstand gleich oder größer als ein Schwellenwert ist, und einem Bestimmen einer Anzahl von Objekten gemäß einer Varianz des Abstands zwischen zwei Berührungspunkten.

11. Einheit nach Anspruch 8, wobei die Steuereinheit (2350) aufweist:
einen Berührungsgestendetektor (2351), der konfiguriert ist, um eine auf dem Berührungsbildschirm (2320, 2330) gebildete Berührungsgeste zu erkennen und zwischen einer einzelnen Berührungsgeste und einer Multi-Touch-Geste zu unterscheiden;
einen Berührungsgestenanalysator (2353), der konfiguriert ist, um zu bestimmen, ob die Berührungsgeste eine einzelne Berührungsgeste oder eine Multi-Touch-Geste ist, und um zu bestimmen, wenn die Berührungsgeste eine Multi-Touch-Geste ist, ob die Berührungsgeste die erste Multi-Touch-Geste oder die zweite Multi-Touch-Geste ist, indem ein Abstand zwischen den beiden Berührungspunkten eines Berührungsereignisses der Multi-Touch-Geste und einem vorbestimmten Schwellenwert verglichen wird, und um anschließend die Richtung eines Ziehereignisses zu prüfen, das auf das Berührungsereignis folgt; und
einen Objektmanager (2355), der konfiguriert ist, um Aufnahme- oder Freigabe-Operationen an dem Objekt (200) gemäß dem Typ der Multi-Touch-Eingabe auszuführen, der durch den Berührungsgestenanalysator (2353) bestimmt wurde.

12. Einheit nach Anspruch 11, wobei die Steuereinheit (2350) ferner einen Synchronisierer (2357) aufweist, der konfiguriert ist, um die Herstellung einer Verbindung mit einer Gegenpart-Einheit (3000) über einen drahtgebundenen oder einen drahtlosen Datenübertragungskanal und eine Kommunikation von Objekten (200) und Nachrichten mit der Gegenpart-Einheit (3000) gemäß den Multi-Touch-Eingaben zu unterstützen.

## Revendications

1. Méthode de gestion d'objet pour un dispositif à fonctionnalité tactile, comprenant :
la réception (103, 1203) d'une première entrée multi-tactile pour la sélection d'un ou plusieurs objets (200) affichés sur un écran tactile ;
le stockage (105, 1207) de l'un ou plusieurs objets sélectionnés (200) et la suppression (107, 1211) de l'un ou plusieurs objets sélectionnés (200) sur l'écran tactile ;
la réception (109, 1213) d'une deuxième entrée multi-tactile pour sortir (111, 1221, 1225) le ou plusieurs objets sélectionnés (200) sur l'écran tactile ; et
l'affichage (113) du ou de plusieurs objets sélectionnés (200) dans une position où la deuxième entrée multi-tactile est reçue sur l'écran tactile, le stockage (105, 1207) et la suppression (107, 1211) d'un affichage du ou de plusieurs objets sélectionnés (200) comprenant :
le prélèvement, l'un après l'autre, d'une pluralité d'objets en réponse à la première entrée multi-tactile ;
le stockage de la pluralité d'objets (200) dans un ordre de prélèvement ; et
la suppression, l'un après l'autre, de la pluralité d'objets sur l'écran tactile dans l'ordre de prélèvement, l'affichage (113) du ou de plusieurs objets sélectionnés (200) comprenant l'affichage, l'un après l'autre, sur l'écran tactile, en réponse à la deuxième entrée multi-tactile, de la pluralité d'objets dans l'ordre inverse de l'ordre de prélèvement, et la méthode comprenant en outre :
l'établissement (2101) d'une connexion avec un dispositif homologue (3000) ;
la transmission (2109) de la pluralité d'objets (200) au dispositif homologue (3000) ; et
l'affichage (2129), au dispositif homologue (3000), de la pluralité d'objets (200) dans une position où est reçue la deuxième entrée multi-tactile sur un écran tactile du dispositif homologue (3000).

2. Méthode de gestion d'objet selon la revendication 1, comprenant en outre :
la détection (1203) d'un geste tactile sur un écran en mode veille (100) ;
l'effacement progressif, lorsque le geste tactile est interprété dans la première entrée multi-tactile, de l'un ou plusieurs objets (200) en réponse à un geste de soulèvement de la première entrée multi-tactile ; et
la suppression (1211) d'un affichage de l'un ou plusieurs objets (200) positionnés là où l'un ou plusieurs objets (200) sont situés sur l'écran tactile, la méthode de gestion d'objet comprenant en outre la récupération (1237), lorsque le geste tactile est interprété comme une entrée pour l'annulation de la première entrée multi-tactile, du ou de plusieurs objets (200) supprimés.

3. Méthode de gestion d'objet selon la revendication 2, l'affichage (113) de l'un ou plusieurs objets comprenant :
la détection d'un geste tactile dans un emplacement sur l'écran tactile ;
l'appel, lorsque le geste tactile est interprété dans la deuxième entrée multi-tactile, du ou de plusieurs objets (200) stockés en réponse à la deuxième entrée multi-tactile ;
la sortie (1221, 1225) du ou de plusieurs objets appelés dans un emplacement où est détectée la deuxième entrée multi-tactile ; et
l'exécution de l'une des actions suivantes : transfert, suppression, copie et modification avec l'un ou plusieurs objets appelés (200) indiqués par la deuxième entrée multi-tactile.

4. Méthode de gestion d'objet selon la revendication 2, l'affichage (113) de l'un ou plusieurs objets (200) comprenant la sortie de la pluralité d'objets (200), et comprenant :
la détection d'une série de gestes tactiles, l'appel, lorsque le geste tactile est interprété en tant que deuxième entrée multi-tactile, d'objets (200) stockés, y compris des objets (200) prélevés précédemment, et la sortie des objets stockés (200) aux emplacements où les gestes tactiles sont détectés dans un ordre de sortie.

5. Méthode de gestion d'objet selon la revendication 1, comprenant en outre :
le calcul (1305), lors de la détection d'une entrée multi-tactile sur l'écran tactile, d'une distance entre deux points tactiles effectués par l'entrée multi-tactile ;
l'interprétation (1309), lorsque la distance est égale ou supérieure à une valeur seuil, de l'entrée multi-tactile en tant qu'initiation de la première entrée multi-tactile ; et
l'interprétation (1321), lorsque la distance est inférieure à une valeur seuil, de l'entrée multi-tactile en tant qu'initiation de la deuxième entrée multi-tactile.

6. Méthode de gestion d'objet selon la revendication 5, comprenant en outre la détermination d'un nombre d'objets en fonction de la variance de la distance entre deux points tactiles.

7. Dispositif possédant un écran tactile, comprenant :
un écran tactile (2320, 2330) configuré pour afficher un ou plusieurs objets (200), et détecter une première entrée multi-tactile pour la sélection d'un ou plusieurs objets, et une deuxième entrée multi-tactile pour la sortie du ou de plusieurs objets (200) sélectionnés ;
une unité de stockage (2340) configurée pour stocker des paramètres relatifs à la première entrée multi-tactile et la deuxième entrée multi-tactile, et stocker un ou plusieurs objets (200) sélectionnés par la première entrée multi-tactile ; et
une unité de commande (2350) configurée pour :
détecter la première entrée multi-tactile pour la sélection d'un ou plusieurs objets (200) affichés sur l'écran tactile (2320, 2330), stocker l'un ou plusieurs objets (200) sélectionnés, supprimer l'un ou plusieurs objets (200) sélectionnés sur l'écran tactile, détecter la deuxième entrée multi-tactile sur l'écran tactile (2320, 2330), et afficher le ou plusieurs objets (200) sélectionnés dans une position où la deuxième entrée multi-tactile est détectée sur l'écran tactile (2320, 2330), l'unité de commande (2350) étant configurée pour le stockage et la suppression du ou de plusieurs objets sélectionnés (200)
en prélevant, l'un après l'autre, une pluralité d'objets en réponse à la première entrée multi-tactile ;
en stockant la pluralité d'objets (200) dans un ordre de prélèvement ; et
en enlevant la pluralité d'objets, l'un après l'autre, sur l'écran tactile dans l'ordre de prélèvement, l'unité de commande (2350) étant configurée pour afficher, en réponse à la deuxième entrée multi-tactile, la pluralité d'objets, l'un après l'autre, sur l'écran tactile dans un ordre inverse à l'ordre de prélèvement, et l'unité de commande (2350) étant configurée en outre
pour établir (2101) une connexion avec un dispositif homologue (3000) ;
pour transmettre (2109) la pluralité d'objets (200) au dispositif homologue (3000) ; et
pour afficher (2129), au dispositif homologue (3000), la pluralité d'objets (200) dans une position où est reçue la deuxième entrée multi-tactile sur un écran tactile du dispositif homologue (3000).

8. Dispositif selon la revendication 7, l'unité de commande (2350) étant configurée en outre pour détecter un geste tactile sur l'écran tactile (2320, 2330), effacer progressivement, lorsque le geste tactile est interprété dans la première entrée multi-tactile, l'un ou plusieurs objets (200) en réponse à un geste de soulèvement de la première entrée multi-tactile, et supprimer un affichage de l'un ou plusieurs objets (200) positionnés là où l'un ou plusieurs objets sont situés sur l'écran tactile (2320, 2330), l'unité de commande (2350) étant configurée en outre pour récupérer, lorsque le geste tactile est interprété comme une entrée pour l'annulation de la première entrée multi-tactile, du ou de plusieurs objets (200) supprimés, et l'unité de commande (2350) étant configurée en outre pour appeler, lorsque le geste tactile est interprété dans la deuxième entrée multi-tactile, le ou de plusieurs objets (200) stockés en réponse à la deuxième entrée multi-tactile, sortir le ou de plusieurs objets (200) appelés dans un emplacement où est détectée la deuxième entrée multi-tactile, et exécuter une des actions suivantes : transfert, suppression, copie et modification avec l'un ou plusieurs objets appelés (200) indiqués par la deuxième entrée multi-tactile.

9. Dispositif selon la revendication 8, l'unité de commande (2350) étant configurée pour appeler, lorsque les gestes tactiles sont interprétés dans les deuxièmes entrées multi-tactiles, des objets (200) stockés, et sortir les objets (200) appelés dans les positions où les gestes tactiles sont détectés dans l'ordre de sortie.

10. Dispositif selon la revendication 8, l'unité de commande (2350) étant configurée pour calculer, lors de la détection d'une entrée multi-tactile sur l'écran tactile (2320, 2330), une distance entre deux points tactiles effectués par l'entrée multi-tactile, et interpréter l'entrée multi-tactile en tant qu'une initiation de la première entrée multi-tactile ou de la deuxième entrée multi-tactile selon que la distance est égale ou supérieure à une valeur seuil, et déterminer un nombre d'objets en fonction de la variance de la distance entre deux points tactiles.

11. Dispositif selon la revendication 8, l'unité de commande (2350) comprenant :
un détecteur de gestes tactiles (2351) configuré pour détecter un geste tactile formé sur l'écran tactile (2320, 2330), et discriminer entre un geste tactile simple et un geste multi-tactile ;
un analyseur de gestes tactiles (2353) configuré pour déterminer d'une part si le geste tactile est un geste tactile simple ou un geste multi-tactile, d'autre part, lorsque le geste tactile est un geste multi-tactile, si le geste tactile est la première entrée multi-tactile ou la deuxième entrée multi-tactile, en comparant une distance entre les deux points tactiles d'un événement tactile du geste multi-tactile et une valeur seuil prédéterminée, puis vérifier la direction d'un événement de glissement suivant l'événement tactile, et
un gestionnaire d'objets (2355) configuré pour effectuer des opérations de prélèvement ou de sortie sur l'objet (200) en fonction du type d'entrée multi-tactile déterminée par l'analyseur de gestes tactiles (2353).

12. Dispositif selon la revendication 11, l'unité de commande (2350) comprenant en outre un synchroniseur (2357) configuré pour supporter l'établissement d'une connexion avec un dispositif homologue (3000) par le biais d'un canal de communication câblé ou sans fil, et la communication d'objets (200) et de messages avec le dispositif homologue (3000) en fonction des entrées multi-tactiles.
